# FASCICULE DE BREVET EUROPEEN

(11) **EP 2 150 375 B1**
(45) Date de publication et mention de la délivrance du brevet: **22.08.2012**
(21) Numéro de dépôt: 08805503.3
(22) Date de dépôt: 23.04.2008
(51) Int. Cl.: B24B 9/14, G02C 13/00, B24B 13/00, G01B 5/20

(54) **PROCEDE DE DETOURAGE DE LENTILLES OPHTALMIQUES PAR LECTURE ET MISE A JOUR D'UN REGISTRE DE BASE DE DONNEES DE LENTILLES ET/OU DE MONTURES**
KONTURFRÄSVERFAHREN FÜR BRILLENGLÄSER MITTELS ABLESEN UND AKTUALISIERUNG EINES DATENBANKREGISTERS FÜR LINSEN UND/ODER FASSUNGEN
METHOD FOR TRIMMING OPHTHALMIC LENSES BY READING OUT AND UPDATING A LENS AND/OR FRAME DATABASE REGISTER

(30) Priorité: 29.05.2007 FR 0703791
(43) Date de publication de la demande: 10.02.2010
(73) Titulaire: Essilor International (Compagnie Générale d'Optique), 94220 Charenton-le-Pont (FR)
(72) Inventeur: TARDY, Aude, F-94220 Charenton Le Pont (FR); IRIBARNE, Lionel, F-94220 Charenton Le Pont (FR); CUSSAC, Laurent, F-94220 Charenton Le Pont (FR); AMGHAR, Fouad, F-94220 Charenton Le Pont (FR); RENAN, Patrice, F-94220 Charenton Le Pont (FR); MOINARD, Bruno, F-94220 Charenton Le Pont (FR); NAUCHE, Michel, F-94220 Charenton Le Pont (FR)
(74) Mandataire: Chauvin, Vincent
(86) Numéro de dépôt international: PCT/FR2008/000584
(87) Numéro de publication internationale: WO 2008/155481

(56) Documents cités:
- EP-A- 0 092 364
- EP-A- 1 154 302
- WO-A-2007/012713
- FR-A- 2 893 152
- US-A1- 2004 032 565

## Description

La présente invention concerne de manière générale la préparation de paires de lunettes ophtalmiques.

Elle concerne plus particulièrement un procédé de détourage d'une lentille ophtalmique, en vue de son montage sur une monture de lunettes.

### ARRIÈRE-PLAN TECHNOLOGIQUE

La partie technique du métier de l'opticien consiste à monter une paire de lentilles ophtalmiques sur une monture sélectionnée par le porteur, de telle sorte que chaque lentille soit convenablement positionnée en regard de l'oeil correspondant du porteur pour exercer au mieux la fonction optique pour laquelle elle a été conçue.

Pour réaliser le montage de cette paire de lentilles ophtalmiques, l'opticien (ou l'opérateur) doit notamment :
- relever les prescriptions du porteur, c'est-à-dire des données optiques et morphologiques nécessaires pour commander les deux lentilles ophtalmiques auprès d'un fabricant,
- acquérir les formes que devront présenter les lentilles ophtalmiques pour être assemblées à la monture choisie,
- centrer chaque lentille, c'est-à-dire déterminer la position qu'occupera chaque lentille sur la monture afin d'être convenablement centrée en regard de la pupille de l'oeil du porteur,
- détourer chaque lentille en usinant ou en découpant son contour à la forme souhaitée, compte tenu des paramètres de forme et de centrage définis, et éventuellement réaliser sur sa tranche un biseau ou une rainure permettant à la lentille de s'emboîter dans la monture choisie.

L'opticien dispose à cet effet d'appareils lui permettant de déterminer les prescriptions du porteur, d'un appareil de lecture de formes pour acquérir les formes que devront présenter les lentilles ophtalmiques, d'un centreur pour centrer chaque lentille, et d'une meuleuse pour détourer chaque lentille. Il dispose en outre d'un ordinateur équipé d'un logiciel de commande pour réaliser la commande des lentilles ophtalmiques auprès du fabricant. Ces différents appareils sont connectés les uns aux autres de manière à pouvoir échanger des informations entre eux, ce qui évite à l'opticien de devoir saisir deux fois, sur deux appareils différents, des données identiques.

Toutefois, ce seul système d'échange de données ne permet pas à l'opticien d'acquérir facilement, lors de chacune des étapes précitées, l'ensemble des données qui lui sont nécessaires pour réaliser un montage précis des lentilles ophtalmiques sur la monture choisie. Par conséquent, soit l'opticien acquiert des données supplémentaires, ce qui accroît sensiblement la durée de préparation de la paire de lunettes, soit il choisit de ne considérer qu'un nombre restreint de données et d'approximer les autres données par des valeurs moyennes.

Dans cette éventualité, l'acquisition des formes que devront présenter les lentilles ophtalmiques présente une précision réduite. En effet, si la monture choisie est une monture de type cerclé, cette acquisition est réalisée en palpant les contours intérieurs des deux cercles de la monture. Ce palpage est généralement effectué par contact au moyen d'un palpeur qui est logé dans l'appareil de lecture de forme, qui se déplace successivement le long des fonds des drageoirs de la monture et qui relève les coordonnées d'une pluralité de points de ces drageoirs. Or, lors du passage du palpeur, ce contact déforme la monture, ce qui nuit à la précision des mesures. Il est alors possible de limiter cette déformation en réduisant l'effort appliqué par le palpeur sur la monture ou de corriger cette déformation, à condition de connaître le matériau de la monture. Cependant, l'opticien a pour habitude de ne pas saisir le matériau de la monture, si bien que la correction qui peut éventuellement être faite reste approximative.

Par ailleurs, ce palpage étant long à mettre en oeuvre, l'opticien ne prend généralement pas le temps d'acquérir la position axiale du drageoir par rapport aux bords des cercles de la monture (ce qui permettrait de détourer et biseauter les lentilles afin qu'elles soient ensuite positionnées de manière esthétique vers l'avant ou vers l'arrière des cercles), ni même la géométrie du drageoir (ce qui permettrait de connaître la manière selon laquelle la lentille va s'emboîter dans le cercle correspondant de la monture). L'étape de détourage des lentilles est alors réalisée de manière approximative.

Le centrage des lentilles est quant à lui réalisé à l'aide d'un dispositif d'acquisition d'images hébergé dans le centreur, qui permet de mesurer les déviations qu'induit chaque lentille sur des rayons lumineux issus d'une source de lumière et qui permet d'en déduire les puissances optiques de la lentille. La distance séparant le dispositif d'acquisition d'images et le sommet de la lentille présente une influence sur le résultat de ce calcul de puissances. Afin de réduire la durée de préparation de la paire de lunettes correspondante, l'opticien n'acquiert généralement pas les coordonnées du sommet de la lentille, si bien que le calcul de puissances présente une précision réduite.

Par ailleurs, lors du perçage d'une lentille, l'acquisition des positions des trous de perçage est longue et fastidieuse. Elle nécessite en effet de déterminer, sur une lentille de présentation percée, la position de ses trous de perçage, de reporter ces positions sur la lentille ophtalmique choisie, puis de corriger ces positions en fonction du galbe de cette lentille choisie de manière que la différence de galbes entre la lentille de présentation et la lentille choisie ne génère pas un décalage des trous de perçage.

Enfin, préalablement au détourage d'une lentille, l'opticien doit palper les deux faces de cette lentille le long du contour selon laquelle elle sera détourée, afin de s'assurer que son épaisseur en tout point de ce contour est suffisante pour réaliser un biseau, un chanfrein ou une rainure sur sa tranche. Cette opération de palpage est longue et fastidieuse à mettre en oeuvre.

On connaît alors du document EP 0 092 364 un procédé de préparation de lentilles ophtalmiques au cours duquel, lorsqu'on reçoit la monture dans laquelle doivent être montées les lentilles, on identifie cette monture à l'aide d'un code-barre, on saisie sur un ordinateur les références de cette monture, puis on recherche, à l'aide de ces références, si la forme de la monture est déjà connue. Si tel est le cas, il n'est alors nul besoin de palper la forme de la monture pour détourer les lentilles.

L'inconvénient majeur de ce procédé est qu'il nécessite de saisir manuellement les références de la monture, ce qui est fastidieux et source d'erreurs. Cela nécessite par ailleurs de la part de l'opticien de modifier ses habitudes dans le traitement des montures, ce à quoi il répugne souvent.

### OBJET DE L'INVENTION

Afin de remédier aux inconvénients précités de l'état de la technique, la présente invention propose un procédé semi-automatisé de détourage de lentilles ophtalmiques, qui est simple et rapide à mettre en oeuvre et qui permet de réduire la durée de préparation d'une lentille ophtalmique en vue de son assemblage avec une monture de lunettes.

Plus particulièrement, on propose selon l'invention un procédé de détourage tel que défini dans la revendication 1.

Deux montures sont dits de même type si elles présentent au moins une caractéristique commune. Préférentiellement, on considérera ici que deux montures sont de même type si elles sont strictement identiques.

Chaque fabricant de montures connaît l'ensemble des caractéristiques de la monture qu'il fabrique. En revanche, ces caractéristiques ne sont pas toutes communiquées à l'opticien, de sorte que celui-ci est forcé de les acquérir par lui-même. Or, ces montures sont généralement fabriquées en plusieurs exemplaires identiques ou sensiblement identiques. L'objectif de la présente invention est d'éviter qu'un opticien ou qu'un groupe d'opticiens n'acquiert plusieurs fois ces caractéristiques pour des montures identiques ou sensiblement identiques. Dans ce dessein, un registre est mis en place de manière à être accessible à l'opticien ou à l'ensemble des opticiens affiliés. Par accessible, on entend que le registre peut être lu et mis à jour par ces opticiens, qui travaillent de ce fait en collaboration les uns avec les autres.

Selon l'invention, on référence dans un registre des données relatives à ces montures. Ainsi, lors de la mise en oeuvre du procédé, on cherche dans le registre un enregistrement correspondant à la monture considérée. Si cet enregistrement n'existe pas, il est prévu de le créer afin d'enrichir la base de données du registre. En revanche, s'il existe, les appareils de l'opticien peuvent récupérer l'ensemble des données utiles à la préparation de la paire de lunettes, de manière que le détourage des lentilles soit réalisé avec une grande précision sans que la mise en oeuvre de ce procédé soit pour autant longue et fastidieuse.

Préférentiellement, le registre est hébergé sur un serveur par une personne tierce et est mis à jour par l'ensemble des opticiens affiliés. Ainsi, lorsqu'un type de montures ou de lentilles n'est pas connu, l'opticien concerné acquiert l'ensemble des caractéristiques de cette monture ou de cette lentille, puis partage le résultat de ses travaux avec les autres opticiens affiliés.

En variante, le registre peut être hébergé par l'unité de traitement de l'un des ateliers qui forme ainsi un serveur.

Il est également possible de prévoir un registre sur l'unité de traitement de chaque atelier. De cette manière, chaque opticien travaille préférentiellement à l'aide de son seul registre. En revanche, s'il est amené à travailler sur une lentille ou sur une monture non référencée dans son registre, son unité de traitement peut faire appel aux registres des autres opticiens afin de déterminer les caractéristiques recherchées. En variante, les registres des différents ateliers peuvent se mettre régulièrement à jour en récupérant sur les registres des autres ateliers les nouvelles données qu'ils ont mémorisées.

Il est enfin prévu qu'un opticien qui dispose de temps libre puisse acquérir des caractéristiques de lentilles ou de montures dont il dispose, afin d'enrichir la base de données, sans nécessairement procéder ensuite au détourage de ces lentilles ou des lentilles à emboîter dans ces montures.

On entend par atelier un lieu dans lequel sont disposés des outils permettant à un opticien de préparer une lentille (en la centrant et en la détourant). Généralement, un tel atelier est formé par le magasin de l'opticien. Il peut également être formé par une partie seulement d'un centre de préparation de lentilles.

On entend par caractéristique de centrage et/ou de détourage une caractéristique de la lentille ou de la monture considérée, qui est utile pour trouver le référentiel optique de la lentille à détourer ou pour élaborer la consigne de détourage de cette lentille.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique d'un premier mode de réalisation d'un dispositif de préparation d'une paire de lunettes ;
- la figure 2 est une vue schématique d'une variante de réalisation du dispositif de préparation de la figure 1 ;
- la figure 3 est une vue de face d'une paire de lunettes cerclée ;
- la figure 4 est une vue de dessus, en coupe, de la paire de lunettes de la figure 3 ;
- la figure 5 est une vue de côté de la paire de lunettes de la figure 3 ;
- la figure 6 est une vue de côté d'un porteur muni de la paire de lunettes de la figure 3 ;
- la figure 7 est une vue en coupe selon le plan A-A de la figure 3 ;
- la figure 8 une vue de face du porteur muni de la paire de lunettes de la figure 3 ; et
- la figure 9 est une vue de face d'une paire de lunettes percée.

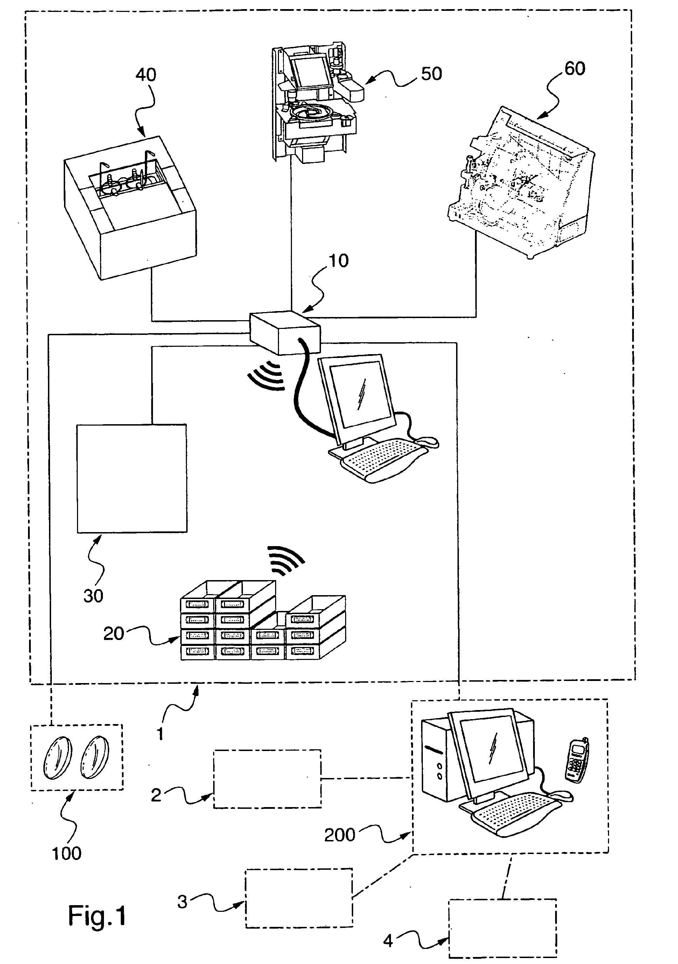

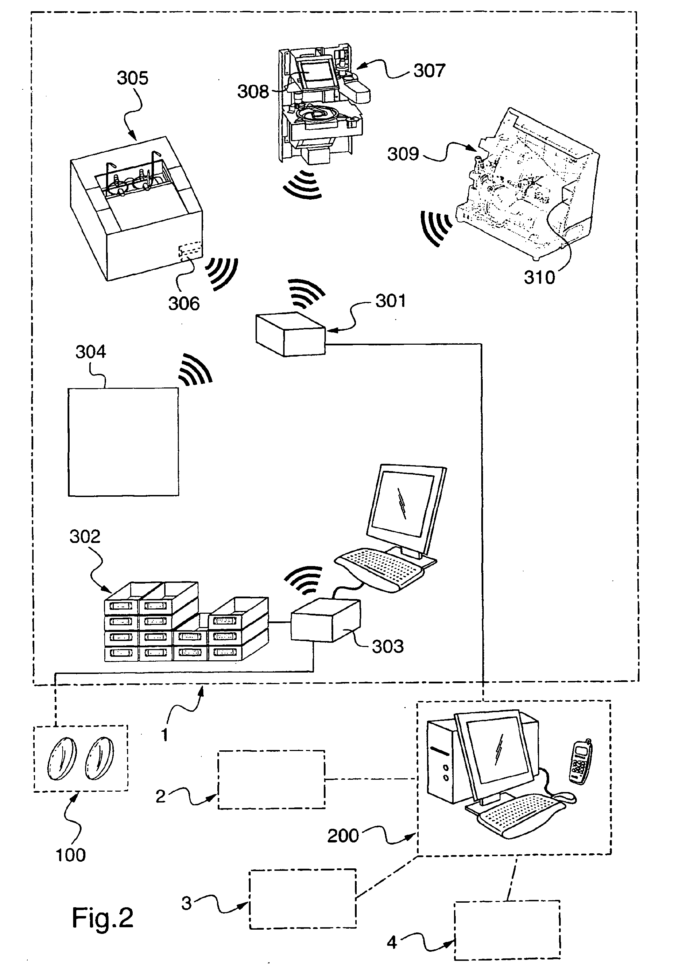

Sur les figures 1 et 2, on a représenté schématiquement une architecture réseau permettant à une pluralité d'opticiens affiliés travaillant dans des ateliers 1, 2, 3, 4 distincts et distants les uns des autres de préparer des paires de lunettes. Cette architecture comporte, outre ces ateliers, un centre de fabrication 100 de lentilles ophtalmiques non détourées et un atelier de suivi et de maintenance 200.

Les figures 1 et 2 représentent deux variantes de réalisation des ateliers distants 1, 2, 3, 4. Dans chacune de ces variantes, chaque atelier distant comporte :
- des moyens de rangement 20 ; 302 des paires de lunettes en préparation ;
- des appareils périphériques 30 ; 304 ;
- un dispositif de lecture de forme 40 ; 305 ;
- un dispositif de centrage et de blocage 50 ; 307 de lentilles ophtalmiques ;
- un dispositif d'usinage 60 ; 309 de lentilles ophtalmiques ; et
- une unité centrale 10 ; 301 de pilotage desdits appareils et dispositifs.

### Les montures

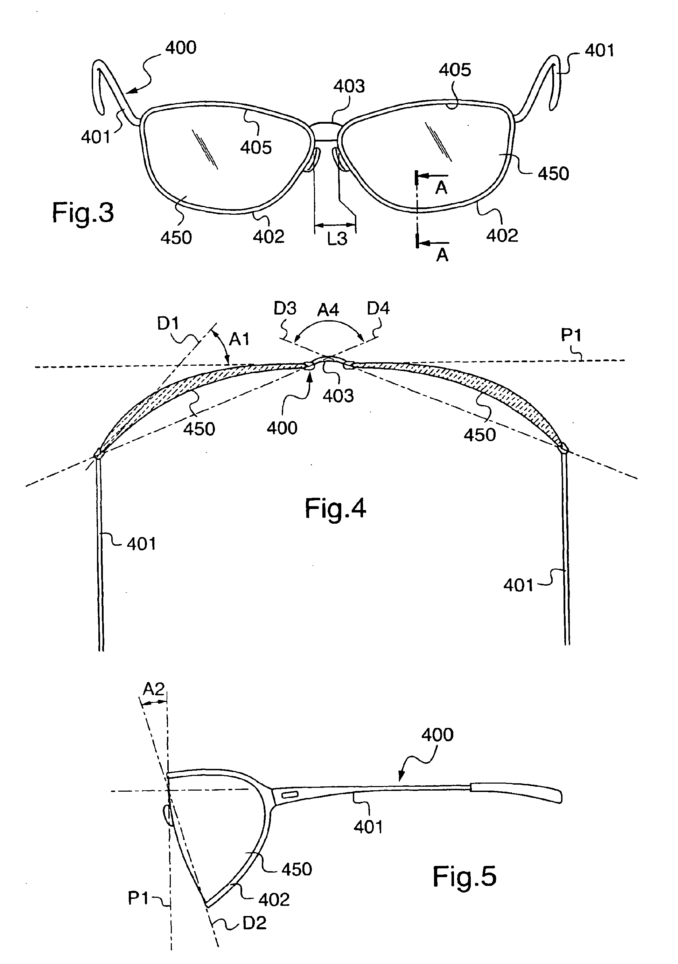

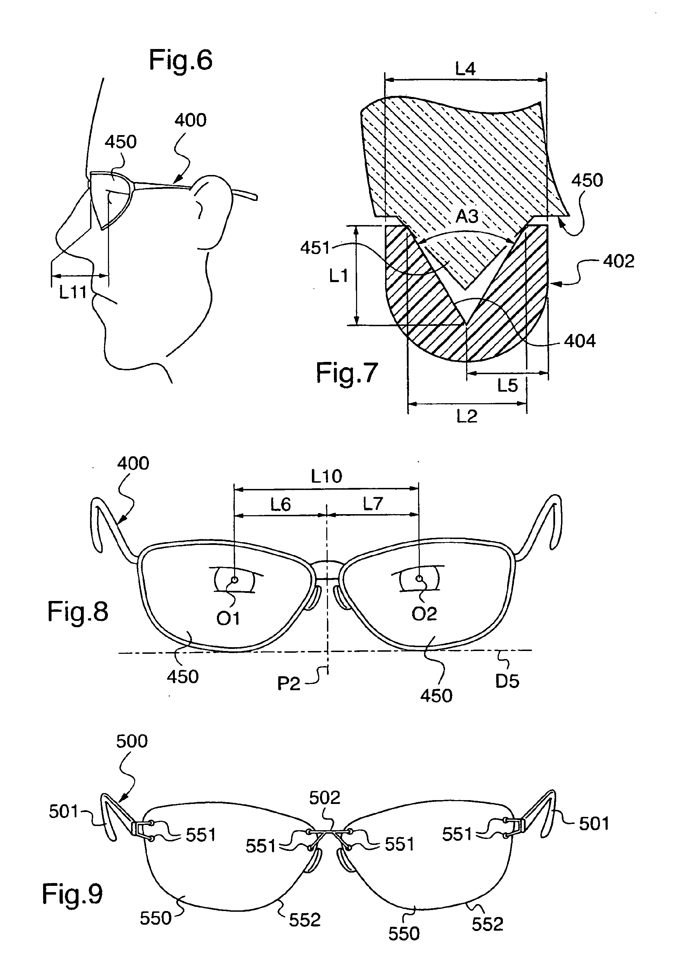

Il existe différentes catégories de montures de lunettes. Parmi celles-ci, on distingue principalement les montures de lunettes cerclées 400 (figure 3), les montures de lunettes semi-cerclées (non représentées), et les montures de lunettes percées 500 (figure 9). Chaque catégorie de montures de lunettes présente diverses caractéristiques qui permettent de définir la forme de la monture concernée et qui sont donc déterminantes dans la préparation d'une lentille ophtalmique en vue de son assemblage avec cette monture.

Les montures de lunettes cerclées 400 comportent classiquement deux cercles 402 qui sont destinés à accueillir chacun une lentille ophtalmique 450 détourée. Ces deux cercles 402 sont reliés l'un à l'autre par un pontet 403 et portent chacun une branche 401 destinée à prendre appui sur l'une des oreilles d'un porteur de la monture. Les branches peuvent prendre deux positions stables, dont une position déployée et une position repliée. Chaque cercle 402 présente une rainure 404 (figure 7), communément appelée drageoir, qui court le long de sa face intérieure.

Les lentilles ophtalmiques 450 correspondantes sont usinées pour présenter sur leurs tranches des nervures d'emboîtement 451, communément appelées biseaux, dont les sections présentent des formes de V (ces formes dépendent bien sûr du type et de l'état de l'outil d'usinage de la lentille). Le biseau 451 ainsi formé sur la tranche de la lentille 450 est adapté à venir s'emboîter dans le drageoir 404 de la monture cerclée 400.

En référence aux figures 3 à 7, on peut présenter une liste non exhaustive de caractéristiques permettant de définir la géométrie d'une monture de lunettes cerclée 400.

On définit tout d'abord le « contour final » 405 d'un cercle 402 comme le contour tridimensionnel décrit par le fond du drageoir de ce cercle. Ce contour final 405 permet de déterminer la forme que devra présenter la tranche de la lentille ophtalmique 450 après usinage pour pouvoir être emboîtée dans ce cercle 402.

On définit également le « type de drageoir » comme la forme de la section du drageoir. La section d'un drageoir peut en effet présenter des formes diverses, généralement en U ou en V.

On définit aussi la « géométrie du drageoir » par au moins les deux caractéristiques que sont sa profondeur L1 (figure 7) et sa largeur à l'ouverture L2. Si le drageoir présente une section en V, on définit en outre un angle d'ouverture A3 comme l'angle que forment ensemble les deux flancs du drageoir. La géométrie du drageoir peut également être définie par les coordonnées d'une pluralité de points d'une même section du drageoir.

On définit le « versage d'un cercle » comme l'inclinaison de son drageoir 404 le long du contour de ce cercle. Plus précisément, on peut quantifier ce versage en chaque section du drageoir à l'aide d'un angle de versage A1 (figure 4) que l'on caractérise au moyen d'un plan général P1 associé à la monture. Ce plan général P1 est défini comme le plan qui passe par le sommet du pontet 403 et qui est orthogonal aux branches 401 de la monture lorsque ces branches sont en position déployée. L'angle de versage A1 correspond alors à l'angle entre le plan général P1 et la bissectrice D1 au dièdre formé par le drageoir 404 au niveau de la section considérée. Cet angle de versage A1 est généralement faible à proximité du pontet 403 de la monture, et élevé à proximité des branches 401.

On définit en outre, relativement à ce plan général P1, un « angle pantoscopique » A2 de la monture 400 (figure 5). Pour ce faire, considérons l'infinité de droites D2 passant par deux points distincts du fond du drageoir 404 de l'un des cercles 402. Chacune de ces droites D2 présente une inclinaison propre par rapport au plan général P1. L'angle pantoscopique A2 est alors l'angle formé entre le plan général P1 et la droite D2 la plus inclinée par rapport à ce plan général P1.

On définit « l'écartement des cercles » comme la distance L3 la plus faible entre les deux cercles 402 de la monture 400 (figure 3).

On définit « l'épaisseur de la monture » comme la largeur L4 d'une section de l'un des cercles 402 (figure 7). Le plus souvent, cette largeur peut être considérée comme constante le long des cercles de la monture 400. Cette épaisseur L4 est bien sûr supérieure à la largeur à l'ouverture L2 des drageoirs 404, si bien que chaque drageoir peut présenter une position variable dans l'épaisseur des cercles, plus ou moins proche du bord avant ou arrière des cercles.

On définit alors la « position du fond de drageoir » comme la distance L5 séparant le fond du drageoir 404 de l'un des bords (par exemple le bord avant) du cercle. Cette distance peut être constante le long du contour de chaque cercle, ou fonction de la section considérée du cercle.

On définit aussi le « galbe global » de la monture 400. Ce galbe peut être quantifié par un angle de galbe A4 séparant les deux droites D3, D4 qui passent chacune par le sommet du pontet 403 et dont l'une passe par le point d'accroche de l'une des branches 401 sur le cercle 402 correspondant de la monture 400 et dont l'autre passe par le point d'accroche de l'autre des branches sur l'autre cercle de la monture.

D'autres caractéristiques non géométriques aident à définir la monture, telles que sa marque et son modèle, son matériau (plastique ou métallique), sa couleur...

Les montures de lunettes semi-cerclées (non représentées) comportent deux demi-cercles sur les faces intérieures desquelles s'étendent des nervures, ainsi que deux fils de maintien qui ferment chacun de ces demi-cercles. Les lentilles ophtalmiques correspondantes présentent quant à elles sur leurs tranches des rainures périphériques dont les sections présentent des formes en V. Les lentilles sont maintenues en place dans la monture en emboîtant leurs nervures dans les rainures des demi-cercles et en tendant les fils de maintien.

Les données caractérisant la géométrie d'une telle monture sont analogues à celles caractérisant la géométrie d'une monture cerclée ; nous ne les exposerons donc pas ici.

Comme le montre la figure 9, dans le cas des montures de lunettes 500 percées, les caractéristiques à définir sont différentes. Une telle monture percée comporte en effet deux branches 501 et un pontet 502, mais est dépourvue de cercle. Ces branches et ce pontet sont en revanche pourvus d'ergots adaptés à s'insérer dans des trous de perçage 551 réalisés sur des lentilles ophtalmiques 550 associées. Généralement, une telle monture est fournie à l'opticien avec des lentilles de présentation (ou gabarits) de puissances nulles.

On définit donc tout d'abord, par rapport à une telle monture 500, les « contours finaux » 552 des lentilles ophtalmiques 550 comme les contours que celles-ci devront présenter pour former avec la monture 550 une paire de lunettes esthétique. Ces contours finaux 552 correspondent généralement aux contours des lentilles de présentation fournies avec la monture 550. En variante, ces contours peuvent être différents et mémorisés dans une base de données ad hoc.

Comme pour une monture de lunettes cerclées, on définit également un angle pantoscopique et un galbe global.

On définit en outre les positions, diamètres et axes des trous de perçage 551 à réaliser sur les lentilles ophtalmiques 550 pour qu'elles puissent être assemblées avec la monture 500.

### Les lentilles

Les lentilles ophtalmiques (non représentées) peuvent être de différents types, à savoir unifocales, multifocales à pastille(s) de vision de près ou intermédiaire avec discontinuité de puissances, ou encore multifocales à addition progressive de puissances.

Chaque lentille ophtalmique présente deux faces optiques, dont une face avant convexe et une face arrière concave, ainsi qu'une tranche périphérique de forme circulaire avant détourage.

L'indice et les géométries des faces avant convexe et arrière concave d'une lentille déterminent son pouvoir de correction optique. Plus précisément, on définit le pouvoir de correction optique d'une lentille ophtalmique correctrice par ses propriétés de réfringence sphérique, cylindrique et prismatique.

Parmi ces propriétés de réfringence, on définit tout d'abord la « puissance optique sphérique » comme la grandeur qui caractérise l'effet loupe de la lentille. Cette puissance correspond à l'inverse de la focale. Le point de la lentille où l'effet loupe est nul (c'est-à-dire, dans le cas d'une lentille ayant une puissance optique exclusivement sphérique, le point où le rayon incident arrivant perpendiculairement à la lentille et le rayon transmis ont même axe) est appelé « point de centrage optique ».

On définit par ailleurs la « puissance optique cylindrique » comme la grandeur qui est destinée à corriger l'astigmatisme et qui caractérise en quelque sorte l'effet de déformation de l'image selon un axe passant par le point de centrage optique, communément appelé « axe de cylindre ».

On définit également la « puissance optique prismatique » comme la grandeur qui caractérise l'effet de déviation de l'image. Cette déviation est réalisée grâce à l'inclinaison de la face avant convexe de la lentille relativement à sa face arrière concave au point de centrage optique.

On définit « l'addition » d'une lentille multifocale comme la différence de puissances optiques sphériques de cette lentille entre ses zones de vision de près et de vision de loin.

On définit aussi les « paramètres de correction d'aberrations » des lentilles, comme les paramètres de caractérisation géométrique de la lentille d'ordre supérieur à deux pour la correction des aberrations d'ordre supérieur à deux de l'oeil à corriger.

Chaque lentille présente d'autres caractéristiques intrinsèques telles que son matériau, son indice, sa marque et son modèle, sa base (l'inverse du rayon de courbure de sa face avant convexe), son diamètre avant détourage, sa flèche (différence de hauteurs entre le point le plus bas et le point le plus haut de la face arrière concave de la lentille avant détourage)...

Elle est en outre caractérisée par les traitements qu'elle a subis chez le fabricant 100, tels que des traitements anti-reflets, hydrophobe, de colorisation uniforme ou dégradée.

On définit aussi pour chaque lentille un « type de marquages ». Généralement, chaque centre de fabrication 100 appose sur les lentilles des marquages de formes qui lui sont propres et qui varient selon le type de la lentille. Ces marquages matérialisent les positions des points remarquables de la lentille (point de vision de près, point de vision de loin, point de centrage optique...). Il existe des marquages provisoires peints sur la lentille et des marquages permanents gravés sur la lentille.

Eventuellement, on peut définir pour chaque lentille des « motifs de gravures » destinés à former des figures esthétiques sur les lentilles.

Enfin, on peut aussi définir des « zones de conflits ». En effet, si la lentille présente une tranche d'épaisseur importante, il se peut qu'une fois la lentille emboîtée dans la monture, le pontet ou les branches de la monture viennent en butée contre les lentilles ophtalmiques. Les lentilles ophtalmiques présentent ainsi des zones de conflit, c'est-à-dire d'interférence, qui sont susceptibles de gêner le porteur ou le repliement des branches et qu'il est nécessaire d'usiner. On parle de facettage de la lentille.

### Le porteur

Le porteur présente une acuité visuelle dont dépendent les prescriptions de ses lentilles ophtalmiques (puissances, axe de cylindre, addition...).

Il présente en outre une morphologie et un comportement qui lui sont propres et dont il convient de tenir compte afin de pouvoir adapter au porteur la paire de lunettes qui lui est destinée.

Pour ce faire, on définit les positions des pupilles des yeux du porteur par rapport à la monture de lunettes choisie à l'aide de quatre paramètres liés à sa morphologie. Parmi ces paramètres, on définit les « demi-écarts inter-pupillaires » L6, L7 (figure 8) du porteur comme les distances entre l'arête du nez du porteur et chacune de ses pupilles O1, O2 (on pourrait en variante ne considérer qu'un écart global inter-pupillaire L10 entre les deux pupilles du porteur). On définit également les « hauteurs pupillaires » L8, L9 des pupilles du porteur comme les distances séparant verticalement ses pupilles d'un trait d'horizon D5 passant par les points les plus bas des drageoirs des deux cercles. La connaissance de ces quatre paramètres permet de situer, pour chaque lentille ophtalmique, la position du contour final selon lequel elle devra être détourée de manière que le point de centrage optique de cette lentille (ou tout autre point caractéristique de la lentille) soit correctement positionné relativement à la pupille du porteur.

On définit également le « comportement en mobilité » du regard du porteur. En effet, pour suivre du regard un objet en mouvement, le porteur peut avoir plutôt tendance à suivre cet objet en déplaçant sa tête, ou au contraire en bougeant ses yeux et en gardant sa tête immobile. Déterminer ce type de comportement permet en particulier de réaliser des lentilles à variations progressives de puissances parfaitement adaptées au porteur.

On définit enfin la distance lentille-oeil L11 comme la distance séparant l'oeil du porteur et la face optique arrière d'une lentille emboîtée dans la monture qu'il a choisie (figure 6).

### Le dispositif de lecture de formes

L'opticien, pour relever des caractéristiques géométriques de la monture de lunettes 400, 500 choisie par le porteur, dispose d'un dispositif de lecture de formes 40 ; 305 (figures 1 et 2) apte à relever la géométrie d'un drageoir d'une monture de lunettes cerclée 400 ou celle de la tranche d'une lentille de présentation d'une monture de lunettes semi-cerclée ou percée 500.

Ce dispositif de lecture de formes est bien connu de l'Homme du métier et ne fait pas en propre l'objet de l'invention décrite. Un tel dispositif est par exemple analogue à celui décrit dans le document EP 0 750 172 appartenant à la demanderesse ou à celui commercialisé par celle-ci sous l'une des marques Kappa et Kappa CT. Il permet de relever des coordonnées d'une pluralité de points caractérisant la forme du contour final 405, 552 de la monture cerclée 400 ou de la lentille de présentation 550.

A cet effet, il comporte classiquement un palpeur qui est apte à venir au contact du drageoir ou de la tranche de la lentille de présentation à palper et qui est actionné par 3 moteurs électriques adéquats.

Dans la variante de réalisation de l'invention représentée sur la figure 1, le dispositif de lecture de formes 40 est dépourvu de moyens électroniques et/ou informatiques propres, lui permettant de piloter ces moteurs électriques. Il comporte en revanche des moyens de communication à très haut débit avec l'unité centrale 10 qui se charge de piloter ces moteurs électriques.

Dans la variante de réalisation de l'invention représentée sur la figure 2, le dispositif de lecture de formes 305 comporte une unité de calcul 306 propre apte à piloter en position et/ou en effort le palpeur. Le dispositif de lecture de formes 305 comporte alors en outre des moyens de communication réseau, tels qu'une carte réseau sans fil (communément appelée carte WIFI), aptes à communiquer avec l'unité centrale 301, en vue d'un échange de données entre le dispositif de lecture de formes 305 et l'unité centrale 301.

Selon une autre variante de réalisation de l'invention (non représentée), l'acquisition des formes des contours finaux peut être réalisée à l'aide d'un dispositif de centrage, tel que celui décrit ci-après, qui permet de capturer une image de la lentille de présentation (ou d'un gabarit) ou de la monture, de manière que l'unité centrale 10 puisse traiter cette image et en déduire les formes précises des contours finaux.

Le dispositif de centrage et de blocage de lentilles ophtalmiques

L'opticien, pour déterminer des caractéristiques géométriques et optiques des lentilles ophtalmiques fournies par le centre de fabrication 100, dispose d'un dispositif de centrage et de blocage 50 ; 307 (figures 1 et 2).

Ce dispositif est bien connu de l'Homme du métier et ne fait pas en propre l'objet de l'invention décrite. Un tel dispositif est par exemple analogue à celui décrit dans le document FR 06/07574 appartenant à la demanderesse ou à celui commercialisé par celle-ci sous la marque « Kappa CT » ou « Kappa CT D ». Il permet de relever le pouvoir de correction optique de cette lentille et les positions de ses marquages provisoires. Il permet en outre d'appliquer sur la lentille un accessoire de blocage en un point choisi en fonction de la forme du contour final de la monture choisie et/ou des formes des faces optiques de cette lentille et/ou du pouvoir de correction optique de cette lentille et/ou des positions des marquages provisoires de cette lentille.

Ce dispositif 50 ; 307 comporte à cet effet une unité de blocage pourvue d'un bras de manipulation apte à saisir et à déposer un accessoire de blocage sur la lentille. Un tel accessoire permet, une fois collé sur la lentille, de conserver le référentiel optique de la lentille (sa position sur la lentille indique la position des points remarquables de celles-ci). Cette unité comporte des moteurs électriques d'actionnement du bras de manipulation.

Le dispositif 50 ; 307 comporte en outre une unité de centrage pourvue de moyens d'éclairage et de moyens d'imagerie. Ces moyens d'imagerie comportent des moyens de capture d'images (tels qu'une caméra) et des moyens d'affichage d'un motif de points (le motif est vu déformé lorsqu'une lentille est placée sous les moyens d'éclairage, et cette déformation permet de déterminer les puissances optiques de la lentille et de détecter et localiser les points de repérage de cette lentille).

En variante, ce dispositif peut également comporter une unité de palpage pourvue de deux palpeurs aptes à venir au contact des faces optiques de la lentille et à se mouvoir le long de ses faces pour relever les coordonnées d'une pluralité de points de ses faces optiques. Ces palpeurs permettent en particulier de déterminer la flèche de cette lentille ophtalmique ainsi que les hauteurs des points de perçage (points situés sur la face avant de la lentille, au centre des débouchés des trous de perçage à réaliser sur la lentille) et les orientations des axes de perçage de la lentille (ces axes correspondent aux normales à la face avant convexe de la lentille, au niveau des points de perçage).

Dans la variante de réalisation de l'invention représentée sur la figure 1, ce dispositif 50 est dépourvu de moyens électroniques et/ou informatiques propres permettant de piloter ses moteurs électriques et ses moyens d'éclairage et d'imagerie. Ce dispositif n'est en outre pas apte à traiter les images acquises par ces derniers. Il comporte en revanche des moyens de communication à très haut débit avec l'unité centrale 10 qui se charge de remplir ces fonctions.

Dans la variante de réalisation de l'invention représentée sur la figure 2, le dispositif de centrage et de blocage 307 comporte une unité de calcul 308 propre apte à piloter ses moteurs électriques et ses moyens d'éclairage et d'imagerie. Il comporte en outre des moyens de communication réseau, tels qu'une carte réseau sans fil (communément appelée carte WIFI), aptes à communiquer à haut débit avec l'unité centrale 301, en vue d'un échange de données.

Selon une variante non représentée de l'invention, les différentes unités de centrage, de palpage et de blocage de ce dispositif pourraient être indépendantes les unes des autres et reliées par des moyens de communication propres à l'unité centrale.

### Le dispositif d'usinage

L'opticien, pour détourer et éventuellement percer les lentilles ophtalmiques, dispose d'un dispositif d'usinage 60 ; 309 (figures 1 et 2).

Ce dispositif est bien connu de l'Homme du métier et ne fait pas en propre l'objet de l'invention décrite. Un tel dispositif est par exemple analogue à celui décrit dans le document FR 2 887 168 appartenant à la demanderesse ou à celui commercialisé par celle-ci sous la marque « Kappa CT » ou « Kappa CT D ». Il permet de détourer la lentille, de la percer selon des axes et en des positions déterminés (de manière débouchant ou non), de réaliser un chanfrein ou un biseau sur sa tranche (avec ou non une orientation variable), de la facetter, de la chanfreiner, de polir sa tranche, ainsi que de graver ses faces optiques.

Il comporte pour cela deux bras de préhension de la lentille (dont l'un est apte à coopérer avec l'accessoire de blocage), un foret de perçage et une pluralité de meules (et/ou fraises et/ou couteaux et/ou laser) actionnés par des moteurs électriques appropriés. Le train de meules comporte en particulier une meule de finition pourvue d'une rainure de biseautage (pour réaliser un biseau sur la tranche d'une lentille) et d'une nervure de rainurage (pour réaliser une rainure sur la tranche d'une lentille).

Ce dispositif d'usinage 60 ; 309 comporte également un ou deux bras de palpage aptes à déterminer la position de la tranche de la lentille ophtalmique maintenue par les bras de préhension, ainsi que les positions des points de perçage de la lentille et les orientations de ses axes de perçage. Ces bras de palpage sont mus par des moteurs électriques.

Dans la variante de réalisation de l'invention représentée sur la figure 1, le dispositif d'usinage 60 est dépourvu de moyens électroniques et/ou informatiques propres permettant de piloter ses moteurs électriques. Il comporte en revanche des moyens de communication à très haut débit avec l'unité centrale 10 qui se charge de piloter ces moteurs.

Dans la variante de réalisation de l'invention représentée sur la figure 2, le dispositif d'usinage 309 comporte une unité de calcul propre apte à piloter ses moteurs. Il comporte en outre des moyens de communication réseau, tels qu'une carte réseau sans fil (communément appelée carte WIFI), aptes à communiquer avec l'unité centrale 301, en vue d'un échange de données.

### Les appareils périphériques de l'opticien

L'opticien peut éventuellement disposer d'appareils périphériques 30 ; 304 (figures 1 et 2) supplémentaires destinés à faciliter et/ou à accroître la précision du détourage des lentilles ophtalmiques.

En particulier, il peut posséder un appareil tel qu'un pupillomètre ou un dispositif d'acquisition numérique d'images permettant de mesurer avec précision, sur le porteur muni de sa monture, les demi-écarts inter-pupillaires et les hauteurs pupillaires de ce dernier. Un tel dispositif est par exemple analogue à celui décrit dans le document EP 0 395 478.

Dans la variante de réalisation de l'invention représentée sur la figure 1, cet appareil est dépourvu de moyens électroniques et/ou informatiques propres permettant de piloter et traiter les informations acquises. Par exemple, dans le cas où cet appareil est constitué par un dispositif d'acquisition d'images, ce dispositif est seulement apte à capter et éventuellement à mémoriser une image du porteur. Il comporte alors des moyens de communication à très haut débit avec l'unité centrale 10 qui se charge de traiter cette image.

Dans la variante de réalisation de l'invention représentée sur la figure 2, cet appareil comporte une unité de calcul propre apte à traiter ces informations, ainsi que des moyens de communication réseau, tels qu'une carte réseau sans fil (communément appelée carte WIFI), aptes à communiquer avec l'unité centrale 301, en vue d'un échange de données.

L'opticien peut également posséder un frontofocomètre et/ou une unité de réfraction (autoréfractomètre ou aberromètre) apte à relever des caractéristiques optiques des lentilles ophtalmiques, en particulier leurs pouvoirs de correction optique. L'opticien peut aussi posséder un appareil de « monturisation » apte à déterminer des données géométriques propres à la monture et à son implantation sur le visage du porteur, telles que l'angle pantoscopique d'une monture, le galbe global de cette monture, et la distance L11 séparant l'oeil du porteur et la face optique arrière d'une lentille emboîtée dans la monture (figure 6). De tels dispositifs sont par exemple analogues à ceux respectivement décrits dans les documents EP 0680722 ou FR 2863719.

Cet angle pantoscopique et ce galbe global sont caractéristiques de la position que présentera la monture sur le porteur (en position dite du porter). Les données fournies par l'appareil de monturisation permettent à l'unité centrale d'évaluer les déviations qu'induiront les lentilles sur les rayons optiques qui les traverseront avant d'impacter les pupilles du porteur. Ces données permettent alors de centrer les lentilles avec une précision plus grande. Elles permettent aussi de calculer ou choisir de façon personnalisée le design (ou fonction) optique de la lentille.

Dans la variante de réalisation de l'invention représentée sur la figure 1, ces appareils sont dépourvus de moyens électroniques et/ou informatiques propres mais ils comportent des moyens de communication à très haut débit avec l'unité centrale 10. En revanche, dans la variante de réalisation de l'invention représentée sur la figure 2, ces appareils comportent des unités de calcul propres, ainsi que des moyens de communication réseau aptes à communiquer avec l'unité centrale 301, en vue d'un échange de données.

### Les moyens de rangement

Dans son atelier, l'opticien dispose de barquettes à l'intérieur de chacune desquelles est rangée une paire de lunettes qui a été commandée par un client et qui est en cours de confection.

Les paires de lunettes peuvent présenter plusieurs états d'avancement. Dans un premier état, elles sont en attente que l'opticien commande les lentilles au fabricant de lentilles 100 en transmettant à ce dernier les prescriptions morphologiques, optiques et de comportement relevées sur le porteur. Dans un deuxième état, elles sont en attente de réception des lentilles commandées. Dans un troisième état, elles sont en attente que l'opticien usine les lentilles. Dans un quatrième état, elles sont en attente que l'opticien assemble les montures choisies avec les lentilles ophtalmiques correspondantes.

L'opticien dispose alors généralement d'un logiciel de suivi de commande qui est adapté à suivre en temps réel la progression de la confection de chaque paire de lunettes.

Dans la variante de réalisation de l'invention représentée sur la figure 1, ce logiciel est hébergé par l'unité centrale 10.

En revanche, dans la variante de réalisation de l'invention représentée sur la figure 2, les moyens de rangement 302 comportent un ordinateur de commande et de suivi 303 propre. Cet ordinateur de commande et de suivi 303 est apte à réaliser directement la commande d'une paire de lentilles, sans intermédiaire (en shuntant l'unité centrale 301). De cette manière, l'unité centrale 301 présente essentiellement une fonction de serveur. Un écran tactile et un clavier sont alors installés sur l'ordinateur de commande et de suivi 303. Ce dernier est en outre pourvu de moyens de communication sans fil (carte WIFI) qui lui permettent de communiquer avec l'unité centrale 301.

Quoi qu'il en soit, les barquettes sont rangées par îlots, en fonction de leurs états d'avancement. Elles peuvent éventuellement comporter chacune des moyens de localisation de l'îlot dans lequel elles se trouvent, de manière que l'unité centrale 10 puisse connaître en temps réel leurs positions. De tels moyens de localisation sont par exemple décrits dans le document déposé sous le numéro FR 07/01797. Les barquettes sont alors munies de diodes électroluminescentes aptes à s'illuminer pour faciliter leur localisation par l'opticien.

### L'unité centrale

Dans la variante de réalisation de l'invention représentée sur la figure 1, l'unité centrale 10 consiste en un boîtier comportant une carte électronique conçue pour piloter en coordination les différents organes de l'atelier distant 1, tels que les moteurs d'actionnement du palpeur du dispositif de lecture de formes, conformément au procédé qui sera exposé ultérieurement.

Ce boîtier comprend de façon classique une carte mère, un microprocesseur, une mémoire vive et une mémoire de masse permanente. La mémoire de masse contient, pour chacun des appareils de l'atelier 1, un programme d'exécution qui permet de piloter ces appareils. Cette mémoire de masse est de préférence réinscriptible et est avantageusement amovible pour permettre son remplacement rapide ou sa programmation sur un ordinateur distant via une interface de norme standard.

La mémoire de masse est en outre prévue pour mémoriser un registre appelé registre-opticien.

Ce registre-opticien comporte une pluralité d'enregistrements dont chacun est associé à une paire de lunettes en cours de confection. Le nombre d'enregistrements est alors égal au nombre de paires de lunettes disposées dans les barquettes.

Chaque enregistrement comprend une pluralité de rubriques dont :
- une rubrique pour une donnée d'identification de la paire de lunettes associée à l'enregistrement concerné, à savoir ici le nom du client,
- une rubrique pour une donnée d'indication de l'îlot dans lequel est disposée la barquette correspondant à l'enregistrement concerné,
- une rubrique pour une donnée relative à la date de livraison prévue de la paire de lunettes associée à l'enregistrement concerné, à savoir ici la date de livraison présentée sous la forme AAAAMMJJ (par exemple 20070206 pour le 6 février 2007),
- une rubrique pour une donnée relative aux informations communes aux deux lentilles de la paire de lunettes correspondante, comportant leur type, leur matériau, leur indice, leur marque et leur modèle, leur base, leur diamètre avant détourage, leur traitement et leur type de marquage,
- une ou plusieurs rubriques pour une donnée relative aux caractéristiques de chaque lentille ophtalmique du porteur, comportant ses puissances optiques sphérique, cylindrique et prismatique, l'orientation de son axe de cylindre, son addition, des paramètres de caractérisation géométrique de la lentille d'ordre supérieur à deux pour la correction des aberrations d'ordre supérieur à deux de l'oeil à corriger, ses motifs de gravure, ses zones de conflit, sa flèche,
- une rubrique pour une donnée relative à la morphologie du porteur, comportant ses demi-écarts inter-pupillaires et ses hauteurs pupillaires,
- une rubrique pour une donnée relative au comportement en mobilité du regard du porteur,
- une rubrique pour une donnée relative à la marque de la monture,
- une rubrique pour une donnée relative au modèle ou à la catégorie de modèles de la monture,
- une rubrique pour une donnée relative à l'angle pantoscopique de la monture,
- une rubrique pour une donnée relative au galbe global de la monture,
- une rubrique pour une donnée relative au matériau de la monture,
- une rubrique pour une donnée relative à la couleur de la monture,
- une rubrique pour une donnée relative au contour final de chaque cercle de la monture ou de chaque lentille de présentation associée à la monture,
- une rubrique pour une donnée relative à la catégorie de la monture de lunettes choisie par le porteur,
- une rubrique associée aux montures de lunettes cerclées, pour une donnée relative au type de drageoir, à la géométrie du drageoir, au versage des deux cercles, à l'écartement des cercles, à l'épaisseur de la monture, et à la position du fond de drageoir,
- une rubrique associée aux montures de lunettes percées pour une donnée relative aux positions, diamètres et orientations des axes des trous de perçage,
- une rubrique associée aux montures de lunettes semi-cerclées pour une donnée relative au type de nervure, à la géométrie de la nervure, à l'écartement des demi-cercles, à l'épaisseur de la monture, à la position du sommet de nervure, au galbe global de la monture.

L'unité centrale comporte en outre un logiciel de gestion du registre qui comprend, d'une part, des moyens de requête adaptés à émettre dans le registre une requête sur l'une ou l'autre des rubriques de ses enregistrements, et, d'autre part, des moyens d'écriture qui sont adaptés à écrire des données dans le registre.

Les moyens de requête sont ainsi aptes à rechercher, parmi les enregistrements du registre, celui ou ceux dont les rubriques contiennent des données correspondant à des données recherchées. Quant aux moyens d'écriture, ils sont aptes à créer un nouvel enregistrement dans le registre, à effacer un enregistrement du registre, et à mettre à jour des données mémorisées dans un enregistrement existant.

Le boîtier comporte par ailleurs plusieurs prises pour permettre à l'unité centrale 10 d'envoyer et de recevoir des données à chacun des appareils de l'atelier distant 1.

Plus précisément, il comporte des prises reliées, via des câbles électriques, aux appareils périphériques 30, au dispositif de lecture de forme 40, au dispositif de centrage et de blocage 50 et au dispositif d'usinage 60. De cette manière, l'unité centrale 10 est apte à piloter les moyens d'actionnement de ces différents appareils, de la même manière que si chacun de ces appareils possédait des moyens de pilotage propres.

Le boîtier comporte par ailleurs des moyens de communication avec le fabricant de lentilles 100, de manière à pouvoir lui envoyer les informations nécessaires à l'usinage de lentilles non détourées. Ces moyens de communication peuvent par exemple comporter un logiciel de commande mémorisé par la mémoire de masse, ainsi qu'une carte réseau branchée sur le réseau internet.

Ce boîtier comporte également des moyens de communication avec l'atelier de suivi et de maintenance 200. Ces moyens de communication sont ici confondus avec les moyens de communication précités.

Ce boîtier est par ailleurs raccordé à un écran tactile, à un clavier et à une souris qui forment une interface entre le registre de l'unité centrale 10 et l'opticien.

L'écran tactile est ici en particulier apte à afficher l'état des connexions de l'unité centrale 10 avec les différents appareils de l'atelier 1.

Dans la variante de réalisation de l'invention représentée sur la figure 2, l'unité centrale 301 consiste ici en un boîtier comportant une carte mère, un microprocesseur, une mémoire vive, une mémoire de masse permanente et des moyens de communication réseau, tels qu'une carte réseau sans fil (communément appelée carte WIFI). Elle est en revanche dépourvue de clavier et d'écran. Dans cette variante, le registre-opticien est hébergé dans l'ordinateur de commande et de suivi 303 des moyens de rangement 302. En revanche, les moyens de requête et d'écriture restent hébergés par l'unité centrale 301.

L'unité centrale 301 présente alors essentiellement un rôle de « routeur » (toutes les communications passent par elle). En outre, si les appareils 304, 305, 307, 309 utilisent des langages différents, elle est apte à traduire les données provenant d'un premier appareil avant de les transmettre à un autre appareil pour que les différents appareils 304, 305, 307, 309 puissent communiquer ensemble. Elle comporte donc une fonction de conversion de protocoles de communication.

### L'atelier de suivi et de maintenance

En référence aux figures 1 et 2, l'atelier de suivi et de maintenance 200 comporte un serveur informatique qui comprend classiquement une carte mère, un microprocesseur, une mémoire vive et une mémoire de masse permanente. La mémoire de masse contient deux registres de base de données, dont un registre-monture et un registre-lentille, un logiciel de gestion des registres, un logiciel de mise à jour, un logiciel de suivi et un logiciel de diagnostic.

Ce serveur est accessible à l'ensemble des opticiens affiliés. Les informations que ses registres mémorisent peuvent en particulier être enregistrées, lues et mises à jour par chacun de ces opticiens affiliés via les unités centrales 10 de leurs ateliers 1, 2, 3, 4.

Les unités centrales 10 des ateliers 1, 2, 3, 4 communiquent à cet effet avec le serveur de l'atelier de suivi et de maintenance 200 soit par une liaison internet, soit par une liaison intranet si les différents ateliers 1, 2, 3, 4 sont situés dans un même espace clos et communiquent entre eux par un réseau intranet.

Quoi qu'il en soit, le registre-monture comporte une pluralité d'enregistrements dont chacun est associé à un modèle ou à une catégorie de modèles de montures de lunettes référencés. On entend par catégorie de modèles un ensemble de montures, de marques éventuellement différentes, qui présentent des caractéristiques communes.

Chaque enregistrement du registre-monture comprend une pluralité de rubriques dont :
- une rubrique pour une donnée relative à la marque de la monture,
- une rubrique pour une donnée relative au modèle ou à la catégorie de modèles de la monture,
- une rubrique pour une donnée relative à l'angle pantoscopique de la monture,
- une rubrique pour une donnée relative au galbe global de la monture,
- une rubrique pour une donnée relative au matériau de la monture,
- une rubrique pour une donnée relative à la couleur de la monture,
- une rubrique pour une donnée relative au contour final de chaque cercle de la monture ou de chaque lentille de présentation associée à la monture,
- une rubrique pour une donnée relative à la catégorie de la monture de lunettes choisie par le porteur,
- une rubrique associée aux montures de lunettes cerclées, pour une donnée relative au type de drageoir, à la géométrie du drageoir, au versage des deux cercles, à l'écartement des cercles, à l'épaisseur de la monture, à la position du fond de drageoir,
- une rubrique associée aux montures de lunettes percées pour une donnée relative aux positions, diamètres et orientations des axes des trous de perçage,
- une rubrique associée aux montures de lunettes semi-cerclées pour une donnée relative au type de nervure, à la géométrie de la nervure, à l'écartement des demi-cercles, à l'épaisseur de la monture, à la position axiale (i.e. suivant une direction axiale de la lentille implantée dans le cercle de monture) du sommet de nervure, au galbe global de la monture, aux positions des points d'ancrage du fil ou des points de fin de demi-cercle sur la périphérie de la lentille.

Bien sûr, chaque enregistrement peut présenter des rubriques vides, selon que les valeurs des données associées à ces rubriques sont connues ou non.

Le registre-lentille comporte une pluralité d'enregistrements dont chacun est associé à un modèle ou à une catégorie de modèles de lentilles ophtalmiques référencées.

Chaque enregistrement comprend une pluralité de rubriques dont :
- une rubrique pour une donnée relative à la marque de la lentille,
- une rubrique pour une donnée relative au modèle ou à la catégorie de modèles de la lentille,
- une rubrique pour une donnée relative au matériau de la lentille,
- une rubrique pour une donnée relative à l'indice de lentille,
- une ou plusieurs rubriques pour une ou plusieurs données relatives à la géométrie de l'une et/ou de l'autre des faces optiques de la lentille, telles que des fonctions de représentation de la face considérée ou seulement de la base (i.e. la courbure générale) de la face considérée de la lentille,
- une rubrique pour une donnée relative au diamètre avant détourage de la lentille,
- une rubrique pour une donnée relative au type de marquage de la lentille.

### Le logiciel de gestion

Ici, ces deux registres ne comportent en soi aucune donnée d'identification spécifique de la monture ou de la lentille correspondant à l'enregistrement qui lui est associé. Au contraire, la recherche et l'identification d'un enregistrement porteront sur les rubriques correspondant aux données reçues de la part des unités centrales 10 des opticiens affiliés.

A cet effet, le logiciel de gestion des registres comporte des moyens de requête adaptés à émettre dans l'un ou l'autre des registres une requête sur l'une ou l'autre des rubriques de ses enregistrements.

Les moyens de requête forment une interface entre les registres et les unités centrales 10 des opticiens affiliés. Ils sont conçus pour lire des données dans les registres et sont associés à des moyens d'écriture aptes à écrire des données dans ces registres.

Ces moyens de requête sont adaptés à rechercher, parmi les enregistrements des registres, celui ou ceux dont les rubriques contiennent des données correspondant à des données recherchées. Plus précisément, ces moyens de requête sont adaptés à effectuer une recherche d'un ou plusieurs enregistrements lorsque l'unité centrale 10 d'un opticien envoie des données de recherche correspondant à des données contenues dans les rubriques de l'un des registres.

Les moyens d'écriture sont quant à eux adaptés à créer un nouvel enregistrement dans chaque registre, à effacer un enregistrement du registre, et à mettre à jour des données mémorisées dans un enregistrement existant.

### Le logiciel de diagnostic

Le logiciel de diagnostic est quant à lui adapté à surveiller des paramètres de fonctionnement des appareils des ateliers 1, 2, 3, 4. Ce logiciel est en partie automatisé, et en partie piloté via un terminal par des techniciens rattachés à l'atelier de suivi et de maintenance 200. Ce terminal peut être constitué par l'ordinateur distant, par un autre ordinateur, par un téléphone portable ou par tout type d'autre appareil pourvu de moyens de communication avec l'ordinateur distant. Quel qu'il soit, ce terminal est prévu pour pouvoir accéder à distance à l'ensemble des informations relevées par l'ordinateur distant.

L'unité centrale 10 de chaque atelier est adaptée à envoyer à l'ordinateur distant, à intervalles réguliers ou sur requête du logiciel de diagnostic, des paramètres de fonctionnement, ce qui permet au logiciel de diagnostic de réaliser un diagnostic à distance d'une panne ou d'un dysfonctionnement d'un des appareils de l'atelier distant 1.

Ces paramètres de fonctionnement comportent le résultat de différents tests automatiques qui sont mis en oeuvre par l'unité centrale 10 sur chacun des appareils. Ces paramètres de fonctionnement comportent en particulier des paramètres d'étalonnage des appareils. Parmi ces paramètres, on peut citer :
- les consommations électriques des moteurs d'actionnement des différents appareils, à vide et en charge :
- les mesures des différents mouvements des appareils de l'atelier distant 1 (par exemple, le débattement des bras de palpage du dispositif d'usinage 60) ;
- les durées nécessaires pour que chaque appareil réalise l'une au moins de ses fonctions (par exemple, la durée que met le dispositif de lecture de formes 40 pour palper un drageoir de monture, ou encore la durée nécessaire au dispositif d'usinage pour polir la tranche d'une lentille ophtalmique) ;
- les mesures des positions des différents éléments mobiles des appareils 30, 40, 50, 60 (par exemple, la mesure de la position de la rainure de biseautage de la meule de finition par rapport aux bras de préhension du dispositif d'usinage 60) ;
- la mesure de l'intensité lumineuse générée par les moyens d'éclairage du dispositif de centrage et de blocage 50 ;
- les vérifications du fonctionnement des composants électriques et électroniques des appareils 30, 40, 50, 60 (par exemple, l'allumage de diodes électroluminescentes des barquettes des moyens de rangement 20, l'allumage des moyens d'imagerie du dispositif de centrage et de blocage 50, l'allumage des différents moteurs d'actionnement...) ;
- une information relative à l'accomplissement de l'étalonnage de chaque appareil 30, 40, 50, 60 ;
- le nombre de cycles de mesure ou de traitement effectués par chaque appareil 30, 40, 50, 60 ;
- une information relative à une opération inhabituelle ou à un mauvais usage d'un des appareils 30, 40, 50, 60 (par exemple, un changement prématuré ou tardif du foret du dispositif d'usinage 60, une reprise systématique de l'usinage des lentilles due au fait que ces dernières sont systématiquement trop grandes après usinage, des réglages très fréquents de l'un des appareils...).

Le logiciel de diagnostic reçoit donc ces informations brutes et se charge de les traiter. Pour ce faire, il compare la valeur de chacune de ces informations avec une valeur seuil prédéterminée associée à la marque et au modèle de l'appareil correspondant. Si l'une au moins de ces comparaisons fournit un résultat positif (par exemple, si le temps de polissage dépasse la valeur seuil mémorisée, ce qui est caractéristique d'une meule usée), le logiciel de diagnostic génère un signal d'alerte.

En complément, l'ordinateur distant peut vérifier les évolutions dans le temps de ces informations, et émettre un signal d'alerte si l'une de ces évolutions met en exergue un dysfonctionnement quelconque d'un des appareils. Par exemple, le logiciel de diagnostic peut générer un tel signal d'alerte si les consommations électriques de l'un des moteurs d'actionnement augmentent rapidement (ce qui signifie qu'un organe de l'appareil correspondant se grippe progressivement ou que le moteur présente des problèmes de fonctionnement).

En outre, si la valeur de l'une des informations reçues varie brutalement, ce qui est caractéristique d'une casse, du dérèglement brutal, ou du changement d'un composant, le logiciel de diagnostic peut également générer un signal d'alerte.

Le traitement de ces informations donne alors lieu à la transmission de ces signaux d'alerte sur le terminal du technicien, de manière à avertir rapidement ce dernier du dysfonctionnement correspondant. Le technicien n'est donc pas contraint de consulter régulièrement l'ordinateur distant. En outre, le technicien peut ainsi agir préventivement, avant que l'appareil de l'opticien ne cesse de fonctionner.

Selon l'information concernée et sa valeur par rapport à la valeur seuil correspondante, le technicien peut alors choisir d'intervenir à distance de l'atelier distant 1, ou sur place.

S'il choisit d'intervenir sur place, l'ensemble des informations acquises permet au technicien de travailler plus efficacement. En effet, avant même d'intervenir, il connaît déjà l'origine probable de la panne, si bien qu'il peut apporter les outils adéquats et les pièces de rechange nécessaires.

Pour intervenir à distance, le technicien s'assure dans un premier temps de la réalité du dysfonctionnement ou de la panne. A cet effet, il peut demander à l'opticien de réaliser un nouvel étalonnage ou de nouveaux réglages sur ses appareils. En variante, il peut lancer cet étalonnage ou effectuer ces réglages à distance en prenant le contrôle de l'unité centrale 10 via son terminal. Si une mauvaise manipulation des appareils par l'opticien était à l'origine du signal d'alerte, le technicien évite alors que l'opticien ne réalise une nouvelle fois sa mauvaise manipulation.

Le technicien peut également, sur demande de l'opticien, modifier à distance les paramètres d'étalonnage et les réglages des appareils 30, 40, 50, 60 via son terminal. Par exemple, si l'opticien se plaint d'une mauvaise position axiale du biseau ou de la rainure sur les tranches des lentilles qu'il usine, le technicien modifie à distance les paramètres du dispositif d'usinage 60 afin de réduire ce défaut. Le technicien évite ainsi à l'opticien de réaliser lui-même ce réglage fastidieux et s'assure en outre que ce réglage est correctement effectué.

A titre d'exemples, les paramètres réglables à distance sur le dispositif d'usinage 60 sont les suivants :
- la position axiale de la meule de finition relativement au bras de préhension de la lentille (afin de modifier la position axiale du biseau ou de la rainure sur la tranche de la lentille),
- le défaut d'orientation de la lentille saisie par les bras de préhension autour de l'axe des bras,
- la distance entre les meules et les bras de préhension, ce qui modifie le rayon de détourage des lentilles (afin de le régler lorsque celui-ci est systématiquement plus grand ou plus faible que la valeur de consigne).

Suite à cette intervention à distance, l'opticien se contente de fixer une nouvelle lentille entre les bras de préhension du dispositif d'usinage 60 afin de valider les nouveaux réglages proposés par le technicien. Pour ce faire, le technicien lance alors à distance l'usinage de cette lentille de manière que l'opticien puisse valider visuellement ces nouveaux réglages.

En variante, il est possible de prévoir, dans le registre-opticien, une rubrique relative au stock de consommables de l'opticien (nouveau foret, nouveaux accessoires de blocage...). Ainsi, le logiciel de diagnostic peut vérifier, à intervalles réguliers, les stocks de consommables des opticiens affiliés, puis leur proposer une commande automatique de ces consommables quand le stock atteint un seuil critique.

### Le logiciel de mise à jour

Le logiciel de mise à jour est conçu pour réaliser la mise à jour automatique des différents programmes d'exécution qui sont enregistrés dans les unités centrales 10 des ateliers 1, 2, 3, 4 et qui permettent de piloter les différents appareils 30, 40, 50, 60 de l'opticien.

A cet effet, le logiciel de mise à jour procède à intervalles réguliers au contrôle des versions des programmes d'exécution installés dans l'unité centrale 10 de chaque atelier, ce qui permet non seulement de vérifier si une mise à jour de ces programmes est nécessaire, mais aussi d'obtenir des informations sur les programmes utilisés par les appareils de l'opticien.

Si la version d'un des programmes d'exécution est ancienne ou présente des dysfonctionnements, le logiciel de mise à jour envoie à l'unité centrale 10 correspondante un nouveau programme d'exécution.

Puis, l'unité centrale 10 redémarre de manière à prendre en compte ce nouveau programme d'exécution.

Préférentiellement, cette mise à jour est réalisée en tenant compte des options achetées par l'opticien. Ce logiciel peut également activer temporairement des options supplémentaires, à titre d'essais.

En variante, le logiciel de mise à jour peut être hébergé par l'unité centrale elle-même. A cet effet, le logiciel de mise à jour procède, à intervalles réguliers ou sur requête de l'opticien, au contrôle des versions des programmes d'exécution mémorisés dans l'ordinateur distant, puis compare ces versions avec celles installées dans l'unité centrale 10 de l'atelier. Enfin, si deux versions diffèrent, l'unité centrale 10 rapatrie le nouveau programme d'exécution correspondant afin de le prendre en compte.

### Le logiciel de suivi

Le logiciel de suivi permet de transmettre aux opticiens affiliés des informations relatives à l'utilisation des appareils 30, 40, 50, 60 ainsi que des informations concernant de nouveaux modèles de lentilles accompagnées des préconisations associées.

En particulier, le logiciel de suivi peut proposer, via l'écran tactile de l'unité centrale 10, des démonstrations de préparations de paires de lunettes. Il peut ainsi afficher, sur demande de l'opticien ou à chaque démarrage de l'unité centrale 10, des graphiques prouvant la nécessité de respecter les paramètres d'usinage prescrits par le fabricant et des graphiques illustrant la conséquence d'un non respect de ces paramètres. Il peut également afficher des graphiques soulignant l'importance du choix de la base de la lentille en fonction du galbe global de la monture et des graphiques montrant les effets d'un choix différent.

Le logiciel de suivi est également conçu pour aider l'opticien à mieux choisir une lentille avant de la commander, en lui montrant par exemple le gain d'épaisseur apporté par un matériau haut indice, ou encore l'intérêt de choisir un canal de progression court pour une lentille à variation progressive de puissances destinée à être montée sur une monture dont les cercles sont allongés.

### Acquisition des données porteur

Pour préparer une paire de lunettes, l'opticien commence par faire choisir au porteur une monture parmi l'ensemble des montures dont il dispose en magasin. Puis il acquiert les prescriptions du porteur.

A cet effet, il recueille les prescriptions optiques du porteur (obtenues chez un optométriste). Ces prescriptions comportent en particulier le type de lentille choisie et le pouvoir de réfringence que devront présenter les lentilles pour corriger les déficiences de vision du porteur (c'est-à-dire leurs puissances optiques sphériques, cylindriques et prismatiques et leurs axes de cylindre). Elles peuvent bien sûr comporter d'autres informations telles que, dans le cas des lentilles bifocales ou à variation progressive de puissances, une addition. L'opticien choisit en outre, en accord avec le porteur, l'indice, le matériau, la base et les traitements des lentilles. Ces informations sont alors saisies par l'opticien, via l'écran tactile, et mémorisées dans un nouvel enregistrement du registre opticien.

L'opticien procède en outre à différents examens destinés à déterminer les demi-écarts inter-pupillaires et les hauteurs pupillaires du porteur, ainsi que des paramètres de personnalisation avancée tels que la distance entre la lentille et l'oeil (ou le centre de l'oeil) et/ou le comportement en mobilité de son regard. Il peut utiliser pour cela un simple réglet ou un pupillomètre ou un dispositif d'acquisition numérique d'images du type de ceux précités.

Si l'opticien utilise un réglet, l'opticien saisit ensuite manuellement dans l'unité centrale 10, via le clavier, les valeurs relevées des demi-écarts inter-pupillaires et des hauteurs pupillaires. Ces valeurs sont alors mémorisées dans le nouvel enregistrement du registre-opticien.

Si l'opticien utilise un pupillomètre ou un dispositif d'acquisition numérique d'images, les données relevées sont directement transmises et exploitées par l'unité centrale 10. Cette dernière se charge alors de traiter de manière classique ces données afin d'en déduire les demi-écarts inter-pupillaires et les hauteurs pupillaires du porteur. Elle stocke ensuite ces valeurs dans le nouvel enregistrement du registre-opticien.

En outre, si l'opticien utilise un dispositif d'acquisition numérique d'images, la photo du porteur muni de la monture choisie est également mémorisée dans le registre, en vue d'être exploitée ultérieurement.

### Acquisition des données monture

Afin d'obtenir les géométries des contours finaux ainsi que l'ensemble des caractéristiques de la monture choisie, l'opticien peut procéder de diverses manières. Il peut soit acquérir par lui-même ces caractéristiques, soit utiliser la base de données du registre-monture hébergé sur l'ordinateur distant.

Dans ce dernier cas, l'opticien interroge la base de données en communiquant à l'ordinateur distant, via l'unité centrale 10, les informations concernant la monture qu'il a déjà obtenues. Ainsi, les moyens de requête peuvent rechercher dans ce registre un enregistrement correspondant au modèle ou à la catégorie de modèles auquel appartient la monture choisie.

L'identifiant qui permet aux moyens de requête de déterminer quel est l'enregistrement correspondant peut être formé par la marque et le modèle de la monture choisie, selon une variante non revendiquée.

Selon une autre variante non revendiquée, si la monture choisie est équipée d'un code-barres d'identification, d'un élément RFID (élément de radio-identification) ou de tout autre moyen d'identification, l'identifiant est constitué par ce moyen d'identification.

Selon le mode de réalisation de l'invention, l'opticien va procéder à une lecture rapide de la géométrie du drageoir de l'un des cercles de la monture en acquérant les coordonnées spatiales d'un nombre restreint de points du fond de ce drageoir (par exemple, 36 points). Les coordonnées spatiales de ces points sont ensuite transmises à l'ordinateur distant de manière que les moyens de requête fassent coïncider ces coordonnées spatiales avec les formes mémorisées dans le registre des différents contours finaux.

Cette mise en coïncidence est réalisée pour chaque enregistrement du registre-monture, en calculant les écarts entre chacun des 36 points et le contour final correspondant, et en comparant ces écarts avec une valeur seuil prédéterminée (par exemple 1 millimètre). Si ces écarts présentent tous une valeur inférieure à cette valeur seuil, les moyens de requête considèrent que la monture choisie est du type de celle associée à l'enregistrement considéré. La mise en coïncidence peut alternativement être réalisée en décomposant les formes de drageoir en vecteurs de composantes principales et en comparant les vecteurs de composition de la forme de drageoir de chaque enregistrement avec ceux du contour final.

Si plusieurs enregistrements correspondants sont trouvés, les moyens de requête sélectionnent l'enregistrement pour lequel la somme des écarts calculés est la plus faible et/ou propose, via l'interface utilisateur, le choix entre les différents enregistrements trouvés.

En variante, cette mise en coïncidence peut être réalisée de toute autre manière. Par exemple en calculant, pour chaque enregistrement du registre-monture, un écart-type entre les 36 points et le contour final correspondant, et en comparant cet écart avec une valeur seuil prédéterminée.

Quoi qu'il en soit, si un enregistrement correspondant est trouvé, les moyens de requête transmettent à l'unité centrale 10 l'ensemble des données mémorisées dans cet enregistrement. De cette manière, l'opticien dispose rapidement de l'ensemble des données relatives à la monture choisie, qui vont lui permettre d'usiner les lentilles ophtalmiques avec précision et rapidité.

En revanche, si aucun enregistrement correspondant n'est trouvé dans le registre-monture, les moyens de requête délivrent un signal d'absence de données à l'unité centrale 10. En conséquence, l'écran tactile affiche à l'opticien une alternative. Il lui propose soit de compléter la base de données, en acquérant tout ou partie des caractéristiques de la monture choisie, soit de procéder au centrage et au détourage des lentilles de manière classique, indépendamment du registre-monture, à l'aide de données partielles et moyennées.

S'il choisit de compléter la base de données du registre-monture, l'opticien place la monture choisie (dans le cas d'une monture cerclée) ou les lentilles de présentation correspondant à la monture choisie (dans le cas d'une monture semi-cerclée ou percée) dans le dispositif de lecture de formes 40.

Dans le cas le plus courant d'une monture cerclée, l'unité centrale 10 pilote les moteurs d'actionnement du palpeur pour que celui-ci palpe les contours des drageoirs des deux cercles de la monture, ainsi qu'au moins trois sections transversales de ces drageoirs. Il détermine ainsi les contours finaux des cercles, le type du drageoir, sa profondeur, sa largeur à l'ouverture, son angle d'ouverture, la position du fond de drageoir, l'épaisseur des cercles et leurs versages en chacune de ces trois sections. Par interpolation, l'unité centrale 10 en déduit le versage des cercles en chaque section transversale des drageoirs. L'unité centrale 10 acquiert également la distance séparant les deux cercles de la monture choisie. La manière de réaliser ces palpages et l'utilisation faite des données géométriques de drageoir ainsi obtenues sont par exemple décrites plus en détail dans le brevet EP 0 819 967.

Dans le cas d'une monture semi-cerclée ou percée, l'opticien procède de manière équivalente sur les lentilles de présentation elles-mêmes (en palpant les contours de leurs tranches, leurs trous de perçage ainsi qu'éventuellement une ou plusieurs sections transversales de leurs tranches). L'opticien peut en variante choisir d'acquérir les caractéristiques des lentilles de présentation en captant une image de ces lentilles (par exemple à l'aide du dispositif de centrage et de blocage 50) et en la transmettant à l'unité centrale 10 qui se charge ensuite de la traiter (pour en déduire non seulement les contours finaux de la monture, mais aussi les positions des points de perçage).

L'opticien saisit en outre, à l'aide du clavier de l'unité centrale 10, la marque, le modèle, le matériau et la couleur de la monture.

L'opticien utilise ensuite l'appareil de monturisation pour déterminer l'angle pantoscopique de la monture choisie, le galbe global de cette monture, et la distance séparant chacun des yeux du porteur de la face optique arrière de la lentille correspondante.

L'ensemble de ces informations est alors mémorisé dans l'enregistrement correspondant du registre-opticien et est transmis à l'ordinateur distant.

Les moyens de requête de ce dernier comparent alors les informations obtenues avec les informations mémorisées dans chacun des enregistrements du registre-monture.

Si ces informations sont très proches de celles mémorisées dans un autre enregistrement du registre, les moyens d'écriture (associés aux moyens de requête) ne les enregistrent pas. Dans le cas contraire, ils les enregistrent dans un nouvel enregistrement du registre-monture.

En variante, il est possible de prévoir que les moyens d'écriture n'enregistrent ces informations que si ces dernières sont confirmées par un tiers. Une telle confirmation pourra avoir lieu si un ou plusieurs autres opticiens affiliés transmettent à l'ordinateur distant des informations sensiblement identiques.

### Commande des lentilles

A ce stade, le registre-opticien comporte en mémoire, dans le nouvel enregistrement, l'ensemble des données concernant les prescriptions du porteur ainsi que les caractéristiques de la monture choisie par le porteur.

Avant de commander les lentilles, l'unité centrale 10 peut procéder à des calculs de simulation, à l'aide de ces données, afin de simuler les formes que présenteront les lentilles ophtalmiques après détourage. Cette simulation permet ainsi non seulement de vérifier que les lentilles pourront effectivement être assemblées sur la monture choisie, mais aussi de s'assurer que la paire de lunettes présentera après assemblage un esthétisme correct (pour s'assurer en particulier que la position axiale de la lentille par rapport au cercle de la monture est telle que la face avant de la lentille affleure le bord avant de la monture).

Pour ce faire, plusieurs méthodes peuvent être mises en oeuvre par l'opticien.

Selon une première méthode préférentielle, l'opticien interroge la base de données du registre-lentille en communiquant à l'ordinateur distant, via l'unité centrale 10, les informations qu'il possède au sujet des lentilles à commander. Ainsi les moyens de requête peuvent-ils rechercher dans le registre-lentille deux enregistrements correspondant aux modèles ou aux catégories de modèles auxquels appartiennent ces lentilles ophtalmiques.

Les identifiants des lentilles qui permettent aux moyens de requête de trouver dans le registre-lentille les enregistrements correspondant aux lentilles à commander peuvent être formés, d'une part, par la marque et le modèle des lentilles à commander, et, d'autre part, par les puissances optiques des lentilles (déduites des prescriptions du porteur).

Dans un premier temps, nous considérerons le cas où deux enregistrements correspondant exactement à la requête sont trouvés dans le registre-lentille. Dans ce cas, les moyens de requête transmettent à l'unité centrale 10 l'ensemble des données mémorisées dans ces enregistrements. Ces données sont alors mises en mémoire dans le registre-opticien. De cette manière, l'opticien dispose rapidement et facilement de l'ensemble des données relatives aux deux lentilles ophtalmiques à commander.

Ces données mémorisées comportent ici :
- la géométrie (i.e. une cartographie) des faces optiques de chacune des lentilles à commander,
- les épaisseurs de chacune de ces lentilles,
- les indices de chacune de ces lentilles,
- les matériaux de chacune de ces lentilles,
- le diamètre avant détourage de chacune de ces lentilles,
- la position du référentiel optique de chacune de ces lentilles par rapport à leurs marquages.

Ainsi l'unité centrale 10 peut-elle, à partir de l'ensemble des données mémorisées dans le registre-opticien, calculer une représentation tridimensionnelle de la monture et des lentilles assemblées.

A cet effet, l'opticien indique, via l'écran tactile ou le clavier de l'unité centrale 10, la position désirée des lentilles dans les cercles (faces optiques avant des lentilles affleurant les bords avants des cercles, ou faces optiques arrières des lentilles affleurant les bords arrières des cercles, ou cercles à mi-hauteur des tranches des lentilles...).

L'unité centrale 10 en déduit des consignes de détourage des lentilles (c'est-à-dire les fonctions mathématiques qui permettront au programme d'exécution du dispositif d'usinage de détourer puis rainurer ou biseauter ou percer et/ou facetter et/ou chanfreiner et/ou polir la lentille).

Les consignes de détourage sont en particulier calculées en fonction de :
- l'angle pantoscopique de la monture choisie,
- son matériau (qui permet de corriger les déformations de la monture lors de son palpage),
- les contours finaux de ses lentilles ophtalmiques,
- si la monture choisie est du type cerclé, son type de drageoir et sa géométrie (qui permettent de déterminer la profondeur d'enfoncement du biseau dans le drageoir), le versage de son drageoir (afin d'éventuellement incliner le biseau le long de la tranche de la lentille), l'épaisseur des cercles et la position axiale du drageoir (afin d'obtenir la position axiale désirée des lentilles dans les cercles),
- si la monture choisie est du type percé, la position, le diamètre et l'axe de chaque trou de perçage, profondeur de perçage,
- le matériau des lentilles (afin d'adapter les paramètres et type d'usinage au matériau et de prévoir la valeur de la déformation en flexion des lentilles lors de leurs détourages),
- la géométrie de la lentille et/ou de la monture, en particulier la base des lentilles et le galbe global de la monture (afin d'obtenir la position axiale désirée des lentilles dans les cercles),
- le diamètre avant détourage des lentilles,
- le traitement des lentilles (afin typiquement d'adapter les paramètres et type d'usinage au traitement de la lentille tel qu'un traitement hydrophobe la rendant glissante),
- les formes des motifs de gravure.

Puis, en fonction de la cartographie des faces des lentilles, des épaisseurs de ces lentilles de la consigne de détourage déduite et des caractéristiques de la monture, l'unité centrale 10 génère une représentation tridimensionnelle de la monture et des lentilles assemblées. Il déduit en particulier la géométrie de chaque future lentille, avec la position idéale de son biseau ou de sa rainure ou de ses chanfreins et de ses trous de perçage.

Cette simulation peut être affinée en prenant en compte des paramètres supplémentaires. Il est par exemple possible de simuler la possibilité éventuelle du dispositif d'usinage 60 de générer des biseaux à orientations variables, des biseaux de largeurs variables et/ou d'angles au sommet spécifiques. Il est également possible de simuler les défauts bien connus du dispositif d'usinage (tels que le cisaillage qui génère un rognage de la forme théorique du biseau ou un élargissement de la rainure).

Le résultat de la simulation s'affiche alors sur l'écran tactile sous la forme d'une paire de lunettes assemblée. Si le registre-opticien possède une photo du porteur, l'image de la paire de lunettes assemblée peut également être superposée à la photo du porteur. L'opticien peut alors valider cette représentation, et par conséquent valider les consignes de détourage calculées. Il peut sinon, s'il détecte un problème, modifier certains des paramètres précités afin que l'unité centrale calcule de nouvelles consignes de détourage et génère une nouvelle représentation tridimensionnelle de la monture et des lentilles assemblées.

Un tel problème peut par exemple être une épaisseur trop faible (risque de casse) ou au contraire trop importante (disgracieux) des tranches des lentilles. Cette représentation permet en outre à l'opticien (ou à l'unité centrale si elle est pourvue d'un logiciel ad hoc) de vérifier que la base de chaque lentille correspond au galbe global de la monture, de sorte qu'il est possible de réaliser sur la tranche des lentilles des biseaux ou rainures aptes à s'insérer sans forcer dans les drageoirs ou les nervures des cercles ou demi-cercles de la monture choisie. Si ce n'est pas le cas, l'unité centrale peut proposer à l'opticien un modèle de lentilles plus adapté à la monture choisie.

Cette simulation présente également d'autres intérêts. Elle permet à l'opticien de vérifier que les formes des lentilles correspondent aux formes attendues. Elle permet à l'opticien ou à l'unité centrale de s'assurer que les lentilles ne dépassent pas exagérément des bords avant et arrière des cercles de la monture choisie. Elle permet à l'opticien ou à l'unité centrale de déterminer les zones de conflit entre la monture et les lentilles, c'est-à-dire les zones dans lesquelles il sera nécessaire de facetter les bords arrière des lentilles.

Si au vu de cette simulation, l'opticien considère qu'il n'est pas possible d'usiner correctement les lentilles avec les appareils dont il dispose, il est prévu que l'unité centrale 10 indique au fabricant de lentilles 100 de non seulement usiner mais également détourer les lentilles de manière que l'opticien les reçoit prêtes à être montées dans la monture choisie (le fabricant de lentilles est en effet généralement équipé de machines plus performantes que celles de l'opticien). L'unité centrale 10 envoie à cet effet au fabricant de lentilles 100 les caractéristiques de la monture choisie par le porteur.

On peut aussi prévoir que le logiciel de commande soit adapté à détecter l'incapacité des moyens de détourage de l'atelier de l'opticien à détourer convenablement les lentilles. Il en est ainsi, typiquement, lorsque la machine de détourage de l'atelier de l'opticien n'est pas adaptée à détourer des lentilles fortement cambrées et que les lentilles à monter présentent une forte cambrure. Dans cette éventualité, le logiciel émet, via l'interface utilisateur, un message invitant l'opticien à commander l'usinage des lentilles auprès d'un atelier d'usinage spécialisé du fabricant des lentilles.

Enfin, lorsque l'opticien valide la simulation, les données validées par la simulation sont transmises au fabricant de lentilles 100 par l'unité centrale 10, de manière que le fabricant puisse procéder à l'usinage des lentilles.

Considérons maintenant le cas où, lors de la recherche de deux enregistrements correspondants dans le registre-lentille, l'un au moins de ces deux enregistrements n'est pas trouvé.

Les moyens de requête recherchent tout d'abord parmi l'ensemble des enregistrements du registre-lentille, des enregistrements proches de celui recherché initialement. Par exemple, les moyens de requête peuvent rechercher deux enregistrements relatifs à des lentilles dont la marque et le modèle correspondent à la marque et au modèle de la lentille à commander, et dont les puissances sont approchantes (l'un en valeurs supérieures et l'autre en valeurs inférieures) des puissances de la lentille à commander.

Si de tels enregistrements sont trouvés, les données mémorisées dans ces enregistrements sont transmises à l'unité centrale 10, de manière que ce dernier puisse interpoler la forme de la lentille à commander en fonction des données mémorisées dans ces deux enregistrements. Plus précisément, les cartographies mémorisées dans ces enregistrements sont moyennées, afin d'approximer les cartographies des faces optiques de la lentille à commander. Ces cartographies approximées sont ensuite enregistrées dans le nouvel enregistrement du registre-opticien. L'unité centrale 10 procède de la même manière pour approximer l'épaisseur de la lentille à commander, son indice, son diamètre avant détourage et la position de son référentiel optique par rapport à ses marquages.

L'unité centrale 10 peut alors procéder d'une manière identique à celle exposée précédemment, pour simuler l'emboîtement des lentilles à commander dans la monture choisie. Puis, lorsque l'opticien valide la simulation, les données validées par la simulation sont transmises au fabricant de lentilles 100 par l'unité centrale 10, de manière que le fabricant puisse procéder à l'usinage des lentilles.

En revanche, si un seul (ou aucun) enregistrement approchant est trouvé dans le registre-lentille, les moyens de requête délivrent un signal d'absence de données à l'unité centrale 10. L'écran tactile indique à l'opticien qu'il n'est pas possible de réaliser de simulation d'emboîtement avant de commander les deux lentilles. A la réception de ces lentilles, l'écran tactile propose à l'opticien de compléter la base de données du registre-lentille.

S'il valide cette proposition, l'opticien utilise le frontofocomètre et/ou le dispositif de centrage et de blocage 50 afin de déterminer les caractéristiques optiques de chaque lentille reçue qui n'était pas référencée dans le registre-lentille.

L'opticien saisit en outre, à l'aide du clavier de l'unité centrale 10, la marque, le modèle, le matériau, l'indice et les traitements de la lentille considérée.

L'opticien utilise le dispositif de centrage et de blocage 50 afin d'acquérir une image de la lentille. Il obtient alors une image des marquages de la lentille, ainsi qu'éventuellement une image de ses motifs de gravure. L'unité centrale 10 pilote alors de manière classique le dispositif pour centrer la lentille et poser dessus un accessoire de blocage.

Puis, l'opticien place la lentille considérée entre les bras de préhension du dispositif d'usinage 60. L'unité centrale pilote alors les bras de palpage de ce dernier pour déterminer les coordonnées spatiales d'une pluralité de points uniformément répartis sur chacune des faces optiques de la lentille. Pour ce faire, les bras de palpage peuvent palper la lentille selon des cercles concentriques séparés les uns des autres de 5 millimètres, en acquérant les cordonnées spatiales de 72 points de chaque cercle. L'unité centrale 10 obtient ainsi une cartographie précise de la forme de chaque face optique de la lentille considérée.

L'ensemble de ces informations est alors mémorisé dans le nouvel enregistrement du registre-opticien et est transmis à l'ordinateur distant. Les moyens de requête de ce dernier comparent alors les informations reçues avec les informations mémorisées dans le registre-lentille. Si ces informations sont très proches de celles mémorisées dans un autre enregistrement du registre, les moyens d'écriture (associés aux moyens de requête) ne les enregistrent pas. Dans le cas contraire, ils les enregistrent dans un nouvel enregistrement du registre-lentille.

Ces informations sont ainsi mises à la disposition des opticiens affiliés travaillant dans d'autres ateliers 2, 3, 4. De cette manière, lorsqu'un autre opticien désire réaliser une simulation d'emboîtement d'une autre lentille (du même type de celle reçue par le premier opticien), l'unité de traitement de son atelier peut retrouver dans le registre-lentille des informations concernant cette lentille, de manière qu'il a la possibilité d'en déduire une simulation d'emboîtement.

D'autres méthodes permettant de réaliser des simulations d'emboîtement sont également envisageables.

Par exemple, selon une seconde méthode, l'unité centrale 10 peut transmettre au fabricant de lentilles 100 les données concernant les prescriptions du porteur accompagnées des informations relatives à la monture choisie. En retour, le fabricant renvoie à l'unité centrale 10 un ensemble d'informations de centrage et/ou d'usinage. Ces informations comportent alors :
- la géométrie (i.e. une cartographie) des faces optiques de chacune des lentilles à commander,
- les épaisseurs de chacune de ces lentilles,
- les indices de chacune de ces lentilles,
- les matériaux de chacune de ces lentilles,
- le diamètre avant détourage de chacune de ces lentilles,
- la position du référentiel optique de chacune de ces lentilles par rapport à leurs marquages,
- la date de livraison prévue de chaque lentille, et
- le prix de chaque lentille.

L'unité centrale 10 peut alors procéder d'une manière identique à celle exposée précédemment, pour déduire les consignes de détourage des deux lentilles à emboîter dans la monture choisie, ainsi qu'une simulation d'emboîtement.

Puis, lorsque l'opticien valide la simulation, les données validées par la simulation sont transmises au fabricant de lentilles 100 par l'unité centrale 10, de manière que le fabricant puisse procéder à l'usinage des lentilles.

### Réception et centrage des lentilles

A la réception de la paire de lentilles ophtalmiques commandée, l'opticien doit poser un accessoire de blocage sur chaque lentille en un point précis et repéré, de manière à repérer les référentiels des lentilles avant de les bloquer dans le dispositif d'usinage 60.

A cet effet, l'opticien place successivement les deux lentilles ophtalmiques reçues dans le dispositif de centrage et de blocage 50. Le dispositif peut alors procéder de manière classique pour centrer les lentilles (en repérant leurs référentiels optiques, c'est-à-dire leurs points de centrage optiques et leurs axes de cylindre) et pour poser l'accessoire de blocage sur la lentille en un point de blocage déduit du centrage.

En variante, la pose de l'accessoire de blocage peut être facilitée grâce aux informations mémorisées dans le registre-lentille. Il peut en effet être prévu que chaque enregistrement du registre mémorise la position du point de blocage par rapport aux marquages de la lentille. Ainsi, connaissant cette donnée, l'unité centrale 10 peut directement, à partir de la position des marquages de la lentille, déduire la position du point de blocage au niveau duquel doit être posé l'accessoire de blocage.

Ici, la recherche de l'enregistrement correspondant dans le registre lentille peut être réalisée comme précédemment ou selon une autre méthode. Par exemple, si les lentilles ou les emballages dans lesquels les lentilles ont été livrées sont équipés de code-barres, d'éléments RFID (élément de radio-identification) ou de tout autre moyen d'identification, les identifiants des lentilles peuvent être constitués par ces moyens d'identification.

En variante, l'opticien peut procéder à une lecture rapide de la géométrie d'au moins l'une des faces optiques de chaque lentille reçue, en acquérant les coordonnées spatiales d'un nombre restreint de points de ces faces (par exemple, 50 points). Les coordonnées spatiales de ces points sont ensuite transmises à l'ordinateur distant de manière que les moyens de requête fassent coïncider ces coordonnées spatiales avec les cartographies mémorisées dans chaque enregistrement du registre. Les moyens de requête peuvent ainsi trouver les enregistrements correspondants aux lentilles reçues.

Cette variante est particulièrement avantageuse puisqu'elle permet à l'unité centrale 10 de récupérer dans ces enregistrements les puissances des lentilles reçues. L'unité centrale 10 peut alors comparer ces puissances avec les prescriptions du porteur, de manière à vérifier que les lentilles reçues présentent effectivement les caractéristiques optiques voulues, permettant de corriger la vision du porteur. Ainsi, si une erreur à été commise lors de la commande ou de la fabrication des lentilles, l'unité centrale peut détecter cette erreur et en informer l'opticien avant qu'il ne procède au détourage des lentilles.

### Usinage et assemblage des lentilles

Au cours d'une dernière étape, chacune des lentilles est successivement placée par l'opticien dans le dispositif d'usinage 60.

Puis, à partir des consignes de détourage précédemment calculées et validées par la simulation d'emboîtement, l'unité centrale 10 pilote les différentes mobilités du dispositif d'usinage 60 afin de détourer la lentille puis de la biseauter ou de la rainurer ou de la percer et/ou de la facetter et/ou de la chanfreiner et/ou de la polir.

Enfin, l'opticien extrait les lentilles ophtalmiques du dispositif d'usinage 60 et les emboîte ou les visse sur la monture choisie par le porteur.

## Revendications

1. Procédé de détourage d'une seconde lentille ophtalmique (450 ; 550) par un second atelier (1, 2, 3, 4) pourvu d'une unité de traitement électronique et/ou informatique (10) en vue de son montage sur une seconde monture (400 ; 500) appartenant à un certain type de montures, le procédé comportant :
- l'acquisition d'au moins une donnée de prescription propre au porteur de la seconde lentille (450 ; 550),
- l'acquisition d'un identifiant de la seconde monture (400 : 500) et d'au moins une caractéristique de centrage et/ou de détourage qui est relative à la seconde monture (400 ; 500) et qui est associée à la seconde lentille (450 ; 550),
- le calcul d'un référentiel optique et d'une consigne de détourage de la seconde lentille (450 ; 550) en fonction de ladite donnée de prescription et de ladite caractéristique de centrage et/ou de détourage, et
- le détourage de la seconde lentille (450 ; 550) en fonction du référentiel optique calculé et selon la consigne de détourage calculée,
oú de plus étant donné un premier atelier de détourage (1, 2, 3, 4) pourvu d'une unité de traitement électronique et/ou informatique (10), les unités de traitement électronique et/ou informatique (10) des deux ateliers (1, 2, 3, 4) étant aptes à accéder à un registre central de données dont chaque enregistrement est associé à un type de montures et comprend d'une part, un identifiant de ce type de montures qui comporte des données caractéristiques de la géométrie de ce type de montures, et, d'autre part, au moins une caractéristique de centrage et/ou de détourage propre à ce type de montures, le procédé comporte, préalablement à l'acquisition de la caractéristique de centrage et/ou de détourage relative à la seconde monture (400 ; 500) :
- une étape de réception par ledit premier atelier (1, 2, 3, 4) d'une première monture (400 ; 500) appartenant au même type de montures que la seconde monture (400 ; 500), ledit type de montures n'étant associé à aucun enregistrement du registre central,
- une étape d'acquisition pour la première monture (400 ; 500), des coordonnées spatiales d'une pluralité de points d'un drageoir de cette première monture 1400 : 500) ou d'une tranche d'une lentille de présentation de cette première monture (400 : 500) correspondant à un contour final.
- une étape de détermination par ledit premier atelier (1, 2, 3, 4) d'au moins une caractéristique de centrage et/ou de détourage qui est relative à la première monture (400 ; 500) et qui est homologue de la caractéristique de centrage et/ou de détourage relative à la seconde monture (400 ; 500), par mesure ou analyse de la première monture (400 ; 500),
- une étape d'émission d'un signal comprenant ladite au moins une caractéristique de centrage et/ou de détourage déterminée, depuis l'unité de traitement électronique et/ou informatique (10) dudit premier atelier (1, 2, 3, 4) vers le registre central,
- une étape de mise en mémoire, dans un nouvel enregistrement du registre central associé au type auquel appartient la première monture (400 ; 500), de ladite au moins une caractéristique de centrage et/ou de détourage, **caractérisé en ce que** l'acquisition dudit identifiant de la seconde monture (400 : 500) est réalisée en acquérant des coordonnées spatiales d'un nombre restreint de points d'un drageoir de cette seconde monture (400 : 500) ou d'une tranche d'une lentille de présentation de cette seconde monture (400 : 500).
et **en ce que** l'acquisition de ladite au moins une caractéristique de centrage et/ou de détourage relative à la seconde monture (400 ; 500) comporte :
- une étape d'émission par l'unité de traitement électronique et/ou informatique (10) du second atelier (1, 2, 3, 4) vers le registre central d'un signal de requête relatif à la seconde monture (400 ; 500),
- une étape de lecture du registre central avec une recherche fructueuse de l'enregistrement dont l'identifiant correspond à l'identifiant de la seconde monture (400 ; 500),
- une étape de lecture de ladite au moins une caractéristique de centrage et/ou de détourage de cet enregistrement correspondant, et
- une étape de transmission de cette caractéristique de centrage et/ou de détourage depuis le registre central vers l'unité de traitement électronique et/ou informatique (10) du second atelier (1, 2, 3, 4).

2. Procédé selon la revendication précédente, comportant :
- l'acquisition d'au moins une donnée de prescription propre à un porteur d'une première lentille (450 ; 550) à détourer par le premier atelier (1, 2, 3, 4) en vue de son montage sur la première monture (400 ; 500),
- le calcul d'un référentiel optique et d'une consigne de détourage de la première lentille (450 ; 550) en fonction de ladite donnée de prescription et de la caractéristique de centrage et/ou de détourage déterminée lors de l'étape de détermination, et
- le détourage de la première lentille (450 ; 550) en fonction du référentiel optique calculé et selon la consigne de détourage calculée.

3. Procédé selon l'une des revendications précédentes, dans lequel ladite caractéristique de centrage et/ou de détourage est une caractéristique géométrique du type des deux montures (400 ; 500) et dans lequel ladite étape de détermination est réalisée par palpage, avec ou sans contact, d'un drageoir (404) de la première monture (400 ; 500) ou d'une tranche d'une lentille de présentation de la première monture (400 ; 500).

4. Procédé selon l'une des revendications précédentes, dans lequel la caractéristique de centrage et/ou de détourage comporte l'une au moins des données suivantes :
- une marque de la monture (400 ; 500),
- un nom du type de la monture (400 ; 500),
- un angle pantoscopique de la monture (400 ; 500),
- un galbe global de la monture (400 ; 500),
- un matériau de la monture (400 ; 500),
- une ou plusieurs couleurs de la monture (400 ; 500),
- un contour final pour chaque lentille à assembler avec la monture (400 ; 500),
- si la monture (400) est du type cerclé et comporte deux cercles, un type de drageoir de la monture (400), une profondeur de drageoir, une largeur de drageoir, un angle d'ouverture de drageoir, un versage de drageoir, un écartement entre les deux cercles, une épaisseur de cercles, une position axiale de drageoir,
- si la monture (500) est du type percé et est associée à deux lentilles pourvues de trous de perçage (551), une position de chaque trou de perçage (551), un diamètre de trous de perçage, une orientation d'un axe de chaque trou de perçage (551), une profondeur de perçage,
- si la monture est du type semi-cerclé et comporte deux demi-cercles, un type de nervure de la monture considérée, une hauteur de nervure, un écartement entre les deux demi-cercles, une épaisseur de demi-cercles, une position axiale de nervure, les positions des points d'ancrage du fil ou de fin de demi-cercle sur la périphérie de la lentille.

5. Procédé selon l'une des revendications précédentes, dans lequel, les deux ateliers (1, 2, 3, 4) sont distincts et distants, le registre central étant hébergé dans un serveur (200), les étapes d'émission et de transmission de données entre les unités de traitement électronique et/ou informatique (10) des deux ateliers (1, 2, 3, 4) et le registre central du serveur (200) étant réalisées selon un protocole internet.

6. Procédé selon l'une des revendications 1 à 4, dans lequel, les deux ateliers (1, 2, 3, 4) étant confondus et le registre central étant hébergé dans l'unité de traitement électronique et/ou informatique (10) de cet atelier (1, 2, 3, 4), les étapes d'émission et de transmission de données sont réalisées en interne de l'unité de traitement électronique et/ou informatique (10).

## Claims

1. A method of shaping a second ophthalmic lens (450; 550) by a second workshop (1, 2, 3, 4) provided with a computer and/or electronic processor device (10) for mounting the lens on a second frame (400; 500) belonging to a certain frame type, the method comprising:
• acquiring at least one item of prescription data specific to the wearer of the second lens (450; 550);
• acquiring an identifier of the second frame (400; 500) and at least one centering and/or shaping characteristic that relates to the second frame (400; 500) and that is associated with the second lens (450; 550);
• calculating an optical frame of reference and a shaping setpoint for the second lens (450; 550) as a function of said item of prescription data and of said centering and/or shaping characteristic; and
• shaping the second lens (450; 550) as a function of the calculated optical frame of reference and in accordance with the calculated shaping setpoint;
where, in addition, given a first shaping workshop (1, 2, 3, 4) provided with a computer and/or electronic processor device (10), the computer and/or electronic processor devices (10) of the two workshops (1, 2, 3, 4) being suitable for accessing a central data registry in which each record is associated with a frame type and comprises firstly an identifier of the frame type that includes data characteristic of the shape of the frame type, and secondly at least one centering and/or shaping characteristic specific to the frame type, the method comprising, prior to acquiring the centering and/or shaping characteristic relating to the second frame (400; 500):
• a step of said first workshop (1, 2, 3, 4) receiving a first frame (400; 500) belonging to the same frame type as the second frame (400; 500), said frame type not being associated with any record in the central registry;
• a step, for the first frame (400; 500), of acquiring three-dimensional coordinates of a plurality of points of a bezel of said first frame (400; 500) or of an edge face of a presentation lens of said first frame (400; 500) corresponding to a final outline;
• a determination step of said first workshop (1, 2, 3, 4) determining at least one centering and/or shaping characteristic that relates to the first frame (400; 500) and that corresponds to the centering and/or shaping characteristic relating to the second frame (400; 500) by measuring or analyzing the first frame (400; 500);
• a step of sending a signal including said at least one determined centering and/or shaping characteristic from the computer and/or electronic processor device (10) of said first workshop (1, 2, 3, 4) to the central registry; and
• a step of storing said at least one centering and/or shaping characteristic in memory in a new record of the central registry associated with the type to which the first frame (400; 500) belongs;
the method being **characterized in that** the acquisition of said identifier of the second frame (400; 500) is performed by acquiring the three-dimensional coordinates of a small number of points of a bezel of said second frame (400; 500) or of an edge face of a presentation lens of said second frame (400; 500);
and **in that** the acquisition of said at least one centering and/or shaping characteristic relating to the second frame (400; 500) comprises:
• a step of the computer and/or electronic processor device (10) of the second workshop (1, 2, 3, 4) sending a request signal to the central registry relating to the second frame (400; 500);
• a step of reading the central registry with a successful search for the record having an identifier that corresponds to the identifier of the second frame (400; 500);
• a step of reading said at least one centering and/or shaping characteristic from said corresponding record; and
• a step of transmitting said centering and/or shaping characteristic from the central registry to the computer and/or electronic processor device (10) of the second workshop (1, 2, 3, 4).

2. A method according to the preceding claim, comprising:
• acquiring at least one item of prescription data that is specific to a wearer of a first lens (450; 550) to be shaped by the first workshop (1, 2, 3, 4) for mounting in the first frame (400; 500);
• calculating an optical frame of reference and a shaping setpoint for the first lens (450; 550) as a function of said item of prescription data and of the centering and/or shaping characteristic determined during the determination step; and
• shaping the first lens (450; 550) as a function of the calculated optical frame of reference and in accordance with the calculated shaping setpoint.

3. A method according to either preceding claim, wherein said centering and/or shaping characteristic is a geometrical characteristic of the type of the two frames (400; 500) and wherein said determination step is performed, with or without contact, by feeling a bezel (404) of the first frame (400; 500) or an edge face of a presentation lens of the first frame (400; 500).

4. A method according to any preceding claim, wherein the centering and/or shaping characteristic includes at least one of the following data items:
• a trademark of the frame (400; 500);
• a name for the type of the frame (400; 500);
• a pantoscopic angle of the frame (400; 500);
• an overall curvature of the frame (400; 500);
• a material of the frame (400; 500);
• one or more colors of the frame (400; 500);
• a final outline for each lens to be assembled with the frame (400; 500);
• if the frame (400) is of the rimmed type and includes two rims, a bezel type of the frame (400), a bezel depth, a bezel width, a bezel flare angle, a bezel skew, a spacing between the two rims, a rim thickness, an axial position of the bezel;
• if the frame (500) is of the rimless type and is associated with two lenses provided with drill holes (551), a position for each drill hole (551), a diameter for the drill holes, an orientation for the axis of each drill hole (551), a drilling depth;
• if the frame is of the half-rimmed type and has two half-rims, a ridge type for the frame under consideration, a ridge height, a spacing between the two half-rims, a half-rim thickness, an axial position of the ridge, the positions of string anchor or half-rim end points on the periphery of the lens.

5. A method according to any preceding claim, wherein, the two workshops (1, 2, 3, 4) are distinct and remote from each other, the central registry being hosted in a server (200), and the steps of sending and transmitting data between the computer and/or electronic processor devices (10) of the two workshops (1, 2, 3, 4) and the central registry of the server (200) being performed by using an Internet protocol.

6. A method according to any one of claims 1 to 4, wherein the two workshops (1, 2, 3, 4) are a single workshop and the central registry is hosted in the computer and/or electronic processor device (10) of said workshop (1, 2, 3, 4), and the steps of sending and transmitting data are performed internally within the computer and/or electronic processor device (10).

## Patentansprüche

1. Zuschneideverfahren für ein zweites Brillenglas (450; 550) durch eine zweite Werkstatt (1, 2, 3, 4), die für die Montage des zweiten Brillenglases in eine zweite Brillenfassung (400; 500), die einem bestimmten Typ von Fassung angehört, mit einer elektronischen und/oder EDV-Einheit (10) ausgestattet ist, wobei das Verfahren umfasst:
- Erfassen von mindestens einer dem Träger des zweiten Brillenglases (450; 550) spezifischen Brillenrezeptinformation;
- Erfassen einer Identifizierung der zweiten Brillenfassung (400; 500) und mindestens eines Merkmals für das Zentrieren und/oder Zuschneiden, das sich auf die zweite Brillenfassung (400, 500) bezieht und dem zweiten Brillenglas (450; 550) zugeordnet ist,
- Berechnen eines optischen Referenzsystems und einer Zuschneidevorgabe für das zweite Brillenglas (450; 550) in Abhängigkeit der Brillenrezeptinformation und des Merkmals für das Zentrieren und/oder Zuschneiden, und
- Zuschneiden des zweiten Brillenglases (450; 550) in Abhängigkeit des berechneten optischen Referenzsystems und gemäß der berechneten Zuschneidevorgabe, bei dem zudem, da eine erste Zuschneidewerkstatt (1, 2, 3, 4) mit einer elektronischen und/oder EDV-Einheit (10) ausgestattet ist, die elektronischen und/oder EDV-Einheiten (10) beider Werkstätten (1, 2, 3, 4) zu einem zentralen Datenverzeichnis Zugang haben, wobei jede Speicherung einem Typ von Brillenfassung zugeordnet ist und zum einen eine Identifizierung des Typs von Brillenfassung mit den charakteristischen Daten der Geometrie dieses Typs von Brillenfassung umfasst, und zum anderen mindestens ein Merkmal für das Zentrieren und/oder Zuschneiden, das für diesen Typ von Brillenfassung charakteristisch ist, wobei das Verfahren vor dem Erfassen des Merkmals für das Zentrieren und/oder Zuschneiden bezüglich der zweiten Brillenfassung (400; 500) umfasst:
- Erhalten in der ersten Werkstatt (1, 2, 3, 4) einer ersten Fassung (400; 500), die zum selben Typ der Fassungen gehört wie die zweite Fassung (400; 500), wobei dieser Typ von Fassungen keiner einzigen Speicherung des zentralen Verzeichnisses zugeordnet ist,
- Erfassen für die erste Fassung (400; 500) der räumlichen Koordinaten einer Vielzahl von Punkten eines Frontrings dieser ersten Fassung (400, 500) oder einer Kante eines Demonstrierglases dieser ersten Fassung (400; 500) entsprechend einer endgültigen Kontur
- Ermitteln durch Messen oder Analysieren der ersten Fassung (400; 500) von mindestens einem Merkmal für das Zentrieren und/oder Zuschneiden in der ersten Werkstatt (1, 2, 3, 4), wobei sich dieses Merkmal auf die erste Fassung (400; 500) bezieht und zum Merkmal für das Zentrieren und/oder Zuschneiden bezüglich der zweiten Fassung (400; 500) homolog ist,
- Abgeben durch die elektronische und/oder EDV-Einheit (10) der ersten Werkstatt (1, 2, 3, 4) eines Signals, das das mindestens eine ermittelte Merkmal für das Zentrieren und/oder Zuschneiden umfasst, in Richtung des zentralen Verzeichnisses,
- Ablegen des mindestens einen Merkmals für das Zentrieren und/oder Zuschneiden in einem neuen Speicher des zentralen Verzeichnisses, das dem Typ zugeordnet ist, dem die erste Brillenfassung (400, 500) angehört;
**dadurch gekennzeichnet, dass** das Erfassen der Identifizierung der zweiten Fassung (400; 500) realisiert wird, indem die räumlichen Koordinaten einer begrenzten Anzahl von Punkten eines Frontrings dieser zweiten Fassung (400; 500) oder einer Kante eines Demonstrationsglases dieser zweiten Fassung (400; 500) erfasst werden,
und **dadurch gekennzeichnet, dass** das Erfassen des mindestens einen Merkmals für das Zentrieren und/oder Zuschneiden bezüglich der zweiten Fassung (400, 500) umfasst:
- Abgeben eines Abfragesignals bezüglich der zweiten Fassung (400; 500) durch die elektronische und/oder EDV-Einheit (10) der zweiten Werkstatt (1, 2, 3, 4) in Richtung des zentralen Verzeichnisses,
- Ablesen des zentralen Verzeichnisses mit einer erfolgreichen Suche der Speicherung, deren Identifizierung der Identifizierung der zweiten Fassung (400; 500) entspricht,
- Ablesen des mindestens einen Merkmals für das Zentrieren und/oder Zuschneiden dieser entsprechenden Speicherung, und
- Übertragen dieses Merkmals für das Zentrieren und/oder Zuschneiden vom zentralen Verzeichnis zur elektronischen und/oder EDV-Einheit (10) der zweiten Werkstatt (1, 2, 3, 4).

2. Verfahren nach vorausgehendem Anspruch, das umfasst:
- Erfassen von mindestens einer für einen Träger eines ersten Brillenglases (450, 550) spezifischen Brillenrezeptinformation, das von der ersten Werkstatt (1, 2, 3, 4) zugeschnitten wird, um in die erste Fassung (400; 500) montiert zu werden,
- Berechnen eines optischen Referenzsystems und einer Zuschneidevorgabe für das erste Brillenglas (450, 550) in Abhängigkeit der Rezeptvorgabe und des Merkmals für das Zentrieren und/oder Zuschneiden, das beim Determinieren ermittelt wurde, und
- Zuschneiden des ersten Brillenglases (450, 550) in Abhängigkeit des berechneten optischen Referenzsystems und gemäß der berechneten Zuschneidevorgabe.

3. Verfahren nach einem der vorausgehenden Ansprüche, bei dem das Merkmal für das Zentrieren und/oder Zuschneiden ein geometrisches Merkmal des Typs der beiden Fassungen (400, 500) ist und bei dem das Ermitteln durch kontaktloses Abtasten bzw. Abtasten mit Berührung eines Frontrings (404) der ersten Fassung (400, 500) oder einer Kante eines Demonstrationsglases der ersten Fassung (400; 500) realisiert wird.

4. Verfahren nach einem der vorausgehenden Ansprüche, bei dem das Merkmal für das Zentrieren und/oder Zuschneiden mindestens eine der folgenden Daten umfasst:
- eine Marke der Brillenfassung (400; 500)
- einen Namen des Typs der Brillenfassung (400; 500)
- einen pantoskopischen Winkel der Brillenfassung (400; 500)
- eine globale Wölbung der Brillenfassung (400; 500)
- einen Werkstoff der Brillenfassung (400; 500)
- eine oder mehrere Farben der Brillenfassung (400; 500)
- eine endgültige Kontur für jedes mit der Brillenfassung (400; 500) zu verbindendes Brillenglas
- wenn die Brillenfassung (400) eine Fassung mit Rahmen ist und zwei Rahmen umfasst, einen Frontringtyp der Brillenfassung (400), eine Frontringtiefe, eine Frontringbreite, einen Öffnungswinkel des Frontrings, eine Verdrehung des Frontrings, einen Abstand zwischen den zwei Rahmen, eine Stärke der Rahmen, eine axiale Position des Frontrings,
- wenn die Brillenfassung (500) eine rahmenlose Fassung mit Bohrung ist und zwei Brillengläsern mit Bohrlöchern (551) zugeordnet ist, eine Position für jedes Bohrloch (551), einen Durchmesser der Bohrlöcher, eine Richtung einer Achse für jedes Bohrloch (551), eine Bohrtiefe,
- wenn die Brillenfassung eine Fassung mit halbem Rahmen ist und zwei halbe Rahmen umfasst, einen Rillentyp für die jeweilige Fassung, eine Rillenhöhe, einen Abstand zwischen den zwei halben Rahmen, eine Stärke der Halbrahmen, eine axiale Rillenposition, die Positionen der Verankerungspunkte des Fadens oder der Endpunkte der halben Rahmen am Rand des Brillenglases.

5. Verfahren nach einem der vorausgehenden Ansprüche, bei dem die beiden Werkstätten (1, 2, 3, 4) separat und voneinander entfernt sind, wobei sich das zentrale Verzeichnis in einem Server (200) befindet und das Ausgeben und Übertragen von Daten zwischen den elektronischen und/oder EDV-Einheiten (10) der zwei Werkstätten (1, 2, 3, 4) und dem zentralen Verzeichnis des Servers (200) gemäß einem Internet-Protokoll erfolgt.

6. Verfahren nach einem der Ansprüche 1 bis 4, bei dem die beiden Werkstätten (1, 2, 3, 4) eine einzige Werkstatt bilden und das zentrale Verzeichnis in einer elektronischen und/oder EDV-Einheit (10) dieser Werkstatt (1, 2, 3, 4) untergebracht ist und das Ausgeben und Übertragen von Daten innerhalb der elektronischen und/oder EDV-Einheit (10) realisiert wird.
